# EUROPEAN PATENT SPECIFICATION

(11) **EP 3 169 985 B1**
(45) Date of publication and mention of the grant of the patent: **19.06.2019**
(21) Application number: 15822271.1
(22) Date of filing: 17.07.2015
(51) Int. Cl.: G01M 17/00, B62D 21/00, H04N 7/18, G02B 23/08, G01N 21/95

(54) **DEVICE, SYSTEM AND METHOD FOR INSPECTING AN UNDERBODY OF A VEHICLE**
VORRICHTUNG, SYSTEM UND VERFAHREN ZUR INSPEKTION DES UNTERBODENS EINES FAHRZEUGS
DISPOSITIF, SYSTÈME ET PROCÉDÉ D'INSPECTION D'UN DESSOUS DE CAISSE D'UN VÉHICULE

(30) Priority: 18.07.2014 NZ 62762314
(43) Date of publication of application: 24.05.2017
(73) Proprietor: Soter Limited, Kelson, Lower Hutt 5010 (NZ)
(72) Inventor: SIMS, Trevor Alexander, Lower Hutt 5010 (NZ)
(74) Representative: Loustalan, Paul William
(86) International application number: PCT/NZ2015/050094
(87) International publication number: WO 2016/010441

(56) References cited:
- WO-A1-2004/110054
- WO-A2-2004/027373
- CN-A- 101 653 937
- DE-U1- 20 311 529
- JP-A- H1 081 209
- US-A1- 2007 030 349
- US-A1- 2011 302 091
- US-B1- 6 369 849
- JOHN R. ROGERS: "Low-cost robotic arm control", PROCEEDINGS OPTICAL DIAGNOSTICS OF LIVING CELLS II, vol. 6962, 3 April 2008 (2008-04-03), page 696212, XP055447507, US ISSN: 0277-786X, DOI: 10.1117/12.784331 ISBN: 978-1-5106-1324-9

## Description

### FIELD OF THE INVENTION

This present invention relates to a device, a system and a method for inspecting an underbody of a vehicle.

In particular, a preferred form of the present invention relates to a device, a system and a method for performing and recording a visual inspection of an underbody of a vehicle.

### BACKGROUND

The underbodies of motor vehicles, such as cars, buses and trucks, need to be regularly inspected. The inspections may be part of a regulatory safety inspection regime, or part of a preventative maintenance programme.

In New Zealand, for example, the New Zealand Transport Agency (NZTA) oversees periodic safety inspections of registered vehicles that use public roads. Most passenger vehicles are legally required to obtain a Warrant of Fitness (WOF) from the NZTA or an NZTA-approved agent every six or twelve months. A WOF is a document certifying that a vehicle has passed a prescribed inspection of safety and roadworthiness. Commercial or heavy vehicles are similarly required to obtain a certificate of fitness (COF).

The existing WOF inspection process involves an inspector raising a vehicle with a hoist or jack so the inspector can view the underbody of the vehicle. Alternatively, the inspector may enter a pit below the vehicle. The inspector then visually inspects the underbody of the vehicle, including the wheels, the tyres, structural components, suspension components, steering components and the exhaust system. The inspector determines if the vehicle is in a condition that satisfies various safety and roadworthiness criteria, or if repairs are required to bring the vehicle up to or maintain the vehicle in a safe condition.

One problem of existing regulatory inspections is the time taken to complete each vehicle inspection. Often an inspector is required to interchange several times between a position in which the inspector can operate the vehicle, such as in the driver's seat, and a position from which the inspector can view the underbody of the vehicle. Also, for some checks, two inspectors are required. A first inspector may be required to operate the vehicle from within the vehicle while a second inspector observes the underbody of the vehicle. The inspections can therefore take considerable time and/or be expensive.

Also, an inspector may not be able to safely view the underbody of the vehicle during some testing procedures, such as when the vehicle is being tested on a roller brake machine.

Another problem is that the inspections are often subjective. The inspection results typically cannot be reliably checked or compared later to previous inspection results. It may be desirable, for example, to review the results of an earlier inspection of a vehicle when the vehicle has been involved in an accident. Nor can results of previous inspections be readily checked, for example, when auditing inspections and/or inspectors.

Various devices are known in this area, including:
DE 203 11 529 U1 discloses a digital video mirror for inspecting hard to reach places. The mirror consists of a telescopic rod, a housing fixedly or rotatably mounted to one end of the rod, and a handle and a monitor fixedly or rotatably mounted to a second end of the rod.

JP H10 81209 A discloses an apparatus and a method for viewing the bottom of a vehicle by guiding an imaging camera under the vehicle. The apparatus includes a casing having an imaging camera, a monitor for viewing images of the bottom from the camera, and a connecting rod that connects the casing, via a hinge, and the monitor.

CN 101 653 937 A discloses a mobile robot designed for inspecting vehicle bottoms having a circuit control part and a mechanical structure part. The robot has travel units arranged to advance, retreat and turn the robot under a vehicle bottom.

John R. Rogers: 'Low-cost robotic arm control', Proceedings Optical Diagnostics of Living Cells II, vol. 6962, 3 April 2008, page 696212 discloses a robotic vehicle and controller system for under-vehicle inspection. The robotic vehicle has a video camera mounted on a robotic arm that has three degrees of movement, which allow linkages of the arm to move in a vertical plane. The arm has three revolute joints with horizontal axes that are parallel to each other.

US 2007/030349 A1 discloses a vehicle inspection system for detecting suspicious articles in the undercarriages of vehicles. The system comprises a platform, a track associated with the platform, a carriage mounted on the track, and sensors associated with the carriage. The sensors are adapted to obtain data as the carriage moves along the track/platform.

WO 2004/027373 A2 discloses a vehicle inspection system having an imaging device that is mounted on a track within a track mounting. The imaging device is linearly moveable along the track, and is rotatable about the track and an axis that is perpendicular to the track. The track mounting is located between vehicle guide tracks, and is inserted in the floor.

WO 2004/110054 A1 discloses a system for inspecting the underside of vehicles. The system comprises a deployable carrier shuttle having camera and lighting means, and arranged to move under and along the length of a vehicle.

A preferred embodiment of the present invention seeks to address or mitigate one or more of the above problems.

Additionally or alternatively, an embodiment of the present invention seeks to at least provide the public with a useful choice.

### SUMMARY OF THE INVENTION

The present invention provides a remotely operable inspection device for inspecting an underbody of a vehicle, the inspection device comprising: a device controller configured to control operation of the inspection device; a shuttle having first and second parts, the first part arranged to move substantially along a horizontally-extending first axis on a surface under a frame of a vehicle, the second part engaged or engageable with the first part and at least part of the second part being arranged to move relative to the first part substantially along a horizontally-extending second axis, the first axis being transverse to the second axis, the shuttle having at least a narrow configuration when moving the shuttle under a frame of a vehicle, and an extended configuration when inspecting an underbody of a vehicle, and the first and second parts being arranged so that, in the extended configuration: a first end of the second part is further away, in a direction along the second axis, from a middle of the first part than the first end of the second part is in the narrow configuration, and the first end of the second part is located beyond an end of the first part in the direction along the second axis; and a camera module having a camera and being configured to generate image data representing at least a part of an underbody of a vehicle, the camera being movable with the second part relative to the first part.

In one embodiment, the camera module is configured to transmit image data via at least one communications network.

In one embodiment, the second part is arranged to move relative to the first part substantially along a vertically-extending axis so as to move the camera vertically towards or away from at least a part of an underbody of a vehicle.

In one embodiment, the camera module comprises a caddy that holds the camera relative to the second part, the caddy being arranged to move relative to the second part substantially along a vertically-extending axis so as to move the camera vertically towards or away from at least a part of an underbody vehicle.

In one embodiment, the caddy is arranged to move substantially along the vertically-extending axis so as to move the camera between at least a retracted position in which at least a part of the camera is substantially below a top region of the second part and a raised position in which the part of the camera is substantially above the top region of the second part.

In one embodiment, the camera module comprises a caddy that holds the camera relative to the at least part of the second part, the caddy being arranged to move relative to the second part substantially along the second axis so the camera is movable relative to the at least part of the second part substantially along the second axis.

In one embodiment, the camera is movable, substantially along the second axis, between a first position at or near the first end of the at least part of the second part and a second position at or near a second end of the at least part of the second part.

In one embodiment, the camera has a generally vertically-extending pan axis, and the camera is configured to rotate relative to the second part about the pan axis.

In one embodiment, the camera has a generally horizontally-extending tilt axis, and the camera is configured to rotate relative to the second part about the tilt axis.

In one embodiment, the camera is arranged to zoom in and out.

In one embodiment, the inspection device comprises at least one guard arranged to protect the camera from colliding with a vehicle when the inspection device is moving.

In one embodiment, the inspection device comprises at least one sensor arranged on or near the guard, the sensor being configured to detect if the guard collides with a vehicle when the inspection device is moving.

In one embodiment, the inspection device comprises a tyre tread gauge for measuring a tread depth of at least a part of a tyre of a vehicle.

In one embodiment, the inspection device comprises a tyre tread module configured to generate tread data representing the measured tread depth; wherein the tyre tread module comprises the tyre tread gauge, and the tyre tread module is configured to transmit the tread data via at least one communications network.

In one embodiment, the tyre tread gauge has an indicator that visually indicates the measured tread depth, and the camera module is configured to generate image data representing the measured tread depth shown on the indicator, and configured to transmit the image data representing the measured tread depth.

In one embodiment, the tyre tread gauge is mounted to the second part.

In one embodiment, the tyre tread gauge is mounted to the caddy.

In one embodiment, the inspection device comprises one or more lights for illuminating an underbody of a vehicle.

In one embodiment, the inspection device comprises a microphone module having a microphone configured to generate audio data representing sound emanating from a vehicle during inspection of an underbody of the vehicle, the microphone module being configured to transmit the audio data via at least one communications network.

In one embodiment, the first part comprises a trolley, the trolley being arranged to engage a track that extends substantially along the first axis.

In one embodiment, the trolley has at least one wheel that is arranged to engage a track that extends substantially along the first axis.

The present invention further provides an inspection system configured to inspect an underbody of a vehicle, the system comprising: an inspection device as defined above; a system controller configured to control operation of the inspection device, the system controller comprising or being connected to the device controller, the system controller being configured to receive at least image data representing at least a part of an underbody of a vehicle from the camera module of the inspection device; and at least one user device connected to the system controller via at least one communications network.

In one embodiment, the system controller is configured so an inspector can control operation of the inspection device using the user device, from a location remote from the inspection device.

In one embodiment, the user device comprises a display, and the system controller is configured so an inspector can view on the display, from a location remote from the inspection device, one or more images corresponding to image data representing at least a part of an underbody of a vehicle received from the inspection device.

In one embodiment, the system comprises a wheel roller bed configured to rotate at least one wheel of a vehicle.

In one embodiment, the system controller is connected to the wheel roller bed and configured to control operation of the wheel roller bed during inspection of an underbody of a vehicle. In one embodiment, the system controller is configured so that an inspector can control operation of the wheel roller bed using the user device, from a location remote from the inspection device.

In one embodiment, the wheel roller bed comprises a tyre tread gauge arranged to measure the tread depth of a tyre as the tyre is being rotated by the wheel roller bed, the tyre tread gauge being configured to transmit tyre tread data representing the measured tread depth to the system controller.

The present invention further provides a method of inspecting an underbody of a vehicle using an inspection device, the inspection device comprising: a remotely operable device controller configured to control operation of the inspection device; a shuttle having first and second parts, the first part arranged to move substantially along a horizontally-extending first axis on a surface under a frame of the vehicle, the second part engaged or engageable with the first part and at least part of the second part being arranged to move relative to the first part substantially along a horizontally-extending second axis, the first axis being transverse to the second axis, the shuttle having at least a narrow configuration when moving the shuttle under a frame of a vehicle, and an extended configuration when inspecting an underbody of a vehicle, and a camera module having a camera and being configured to generate image data representing at least a part of an underbody of a vehicle, the camera being movable with the second part relative to the first part; wherein the method comprises: with the shuttle in the narrow configuration, moving the shuttle under the frame of the vehicle along the first axis, substantially between wheel tracks of the vehicle; moving the shuttle from the narrow configuration to the extended configuration by moving the at least part of the second part relative to the first part substantially along the second axis so that a first end of the second part substantially extends over one of the wheel tracks of the vehicle; and with the shuttle in the extended configuration, generating image data representing at least a part of the underbody of the vehicle.

In one embodiment, moving the shuttle under the frame of the vehicle along the first axis comprises moving the shuttle under the frame of the vehicle along a longitudinally-extending axis of the vehicle, so the at least part of the second part is located substantially beyond at least a first region that extends between opposed wheels of the vehicle and transversely to the longitudinally-extending axis.

The present invention still further provides a method of inspecting an underbody of a vehicle using an inspection device, the inspection device comprising: a remotely operable device controller configured to control operation of the inspection device; a shuttle having first and second parts, the first part arranged to move substantially along a horizontally-extending first axis on a surface under a frame of the vehicle, the second part engaged or engageable with the first part and at least part of the second part being arranged to move relative to the first part substantially along a horizontally-extending second axis, the first axis being transverse to the second axis, the shuttle having at least a narrow configuration when moving the shuttle under a frame of a vehicle, and an extended configuration when inspecting an underbody of a vehicle, and a camera module having a camera and being configured to generate image data representing at least a part of an underbody of a vehicle, the camera being movable with the second part relative to the first part; wherein the method comprises: with the shuttle in the narrow configuration, moving the shuttle under the frame of the vehicle along the first axis, between adjacent wheels on one side of the vehicle; moving the shuttle from the narrow configuration to the extended configuration by moving the at least part of the second part relative to the first part substantially along the second axis so that a first end of the second part substantially extends into at least a first region that extends between opposed wheels of the vehicle and transversely to a longitudinally-extending axis of the vehicle; and with the shuttle in the extended configuration, generating image data representing at least a part of the underbody of a vehicle.

In one embodiment, moving the shuttle under the frame of the vehicle along the first axis comprises moving the shuttle under the frame of the vehicle along a transversely-extending axis of the vehicle, so the at least part of the second part is located substantially beyond the wheel track defined by the adjacent wheels.

The term 'comprising' as used in this specification and claims means 'consisting at least in part of. When interpreting statements in this specification and claims which include the term 'comprising', other features besides the features prefaced by this term in each statement can also be present. Related terms such as 'comprise' and 'comprised' are to be interpreted in a similar manner.

The term 'connected to' includes all direct or indirect types of communication, including wired and wireless, via a cellular network, via a data bus, or any other computer structure. It is envisaged that they may be intervening elements between the connected integers. Variants such as 'in communication with', 'joined to', and 'attached to' are to be interpreted in a similar manner.

To those skilled in the art to which the invention relates, many changes in construction and widely differing embodiments and applications of the invention will suggest themselves without departing from the scope of the invention as defined in the appended claims.

### BRIEF DESCRIPTION OF THE DRAWINGS

The present invention will now be described, by way of non-limiting example only, with reference to the accompanying drawings, in which:
Figure 1 is a top perspective view of an inspection device for inspecting an underbody of a vehicle, a shuttle of the inspection device being in a narrow and low configuration;
Figure 2 is a top perspective view of the inspection device of figure 1, the shuttle being in a wide and tall configuration;
Figure 3 is a front view of the inspection device of figure 1, the shuttle being in a narrow and low configuration;
Figure 4 is a front view of the inspection device of figure 1, the shuttle being in a narrow and low configuration, showing a camera of the device in alternative locations;
Figure 5 is a front view of the inspection device of figure 1, the shuttle being in a narrow and low configuration, showing the camera in a raised position;
Figure 6 is a front view of the inspection device of figure 1, the shuttle being in a narrow and tall configuration, showing the camera in a raised position;
Figure 7 is a front view of the inspection device of figure 1, the shuttle being in a narrow and tall configuration, showing the camera in a retracted position;
Figure 8 is a front view of the inspection device of figure 1, the shuttle being in a first wide and low configuration and the camera being in a retracted position;
Figure 9 is a front view of the inspection device of figure 1, the shuttle being in a second wide and low configuration and the camera being in a retracted position;
Figure 10 is a front view of the inspection device of figure 1, the shuttle being in a first wide and tall configuration and the camera being in a retracted position;
Figure 11 is a front view of the inspection device of figure 1, the shuttle being in a second wide and tall configuration and the camera being in a retracted position;
Figure 12 is a perspective view of the camera of the inspection device of figure 1 showing the modes of movement of the camera;
Figure 13 is a simplified block diagram of a system for inspecting an underbody of a vehicle;
Figure 14 is a plan schematic view of the inspection device of figure 1 being used to inspect an underbody of a vehicle, with the wheels of the vehicle being shown in solid and the rest of the vehicle being shown in outline, and the inspection device arranged to move under the frame of the vehicle between wheel tracks of the vehicle and along a longitudinally-extending axis of the vehicle;
Figure 15 is a side view of the inspection device of figure 14 under the frame of the vehicle;
Figure 16 is a schematic side view of an alternative wheel roller bed that may be integrated with the system of figure 13, the wheel roller bed having a tyre tread gauge arranged to automatically measure tyre tread depth;
Figure 17 is a plan schematic view of the inspection device of figure 1 being used to inspect an underbody of a vehicle with the wheels of the vehicle being shown in solid and the rest of the vehicle being shown in outline, and the inspection device being alternatively arranged to move under the frame of the vehicle from a side of the vehicle between adjacent wheels on one side of the vehicle and along a transversely extending axis of the vehicle;
Figure 18 is a simplified block diagram of an example form of a computing device.

### DETAILED DESCRIPTION OF A PREFERRED EMBODIMENT

### Inspection device

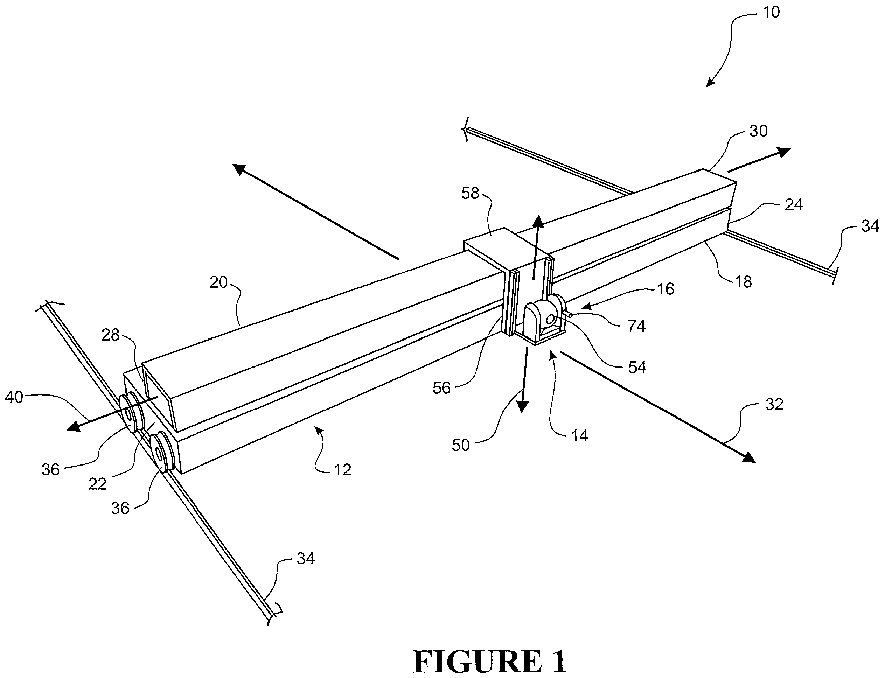

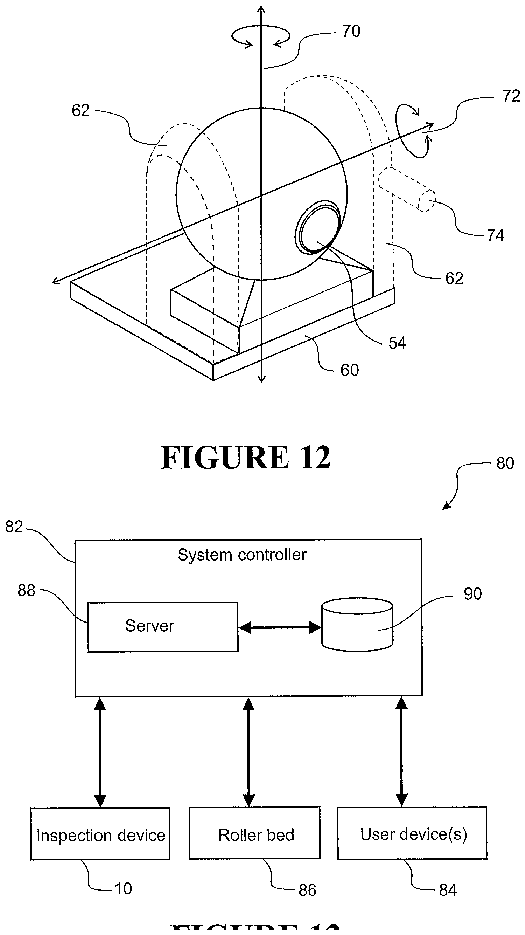

An inspection device 10 that is remotely operable by an inspector to inspect an underbody of a vehicle is shown in figures 1 to 12. The inspection device 10 may be part of an inspection system, such as the inspection system shown in figures 13 to 16.

The inspection device 10 comprises a device controller, a shuttle 12, a camera module 14 configured to generate image data representing an underbody of the vehicle, one or more lights for illuminating the underbody, a tyre tread module 16 for generating tread data representing a tread depth of a tyre of the vehicle, and a microphone module configured to generate audio data representing sound emanating from the vehicle during inspection of the vehicle.

### Device controller

The device controller (not shown) is configured to control the operation of the inspection device 10, including movement of the inspection device by controlling the operation of one or more electric motors. The device controller is configured to transmit and receive information, such as to and from a remotely located system controller for example, when inspecting a vehicle.

### Shuttle

The shuttle 12 is configured to move under the frame of a vehicle being inspected. The shuttle 12 has a lower first part 18, and an upper second part 20. The first and second parts 18, 20 are both elongate members. The first part 18 has first and second ends 22, 24 either side of a middle 26 of the first part 18, the middle 26 corresponding to a centrally-located, vertical axis extending through the first part 18. The second part 20 similarly has first and second ends 28, 30.

The first part 18 is arranged to move substantially along a horizontally-extending first axis 32 in either direction. When the inspection device 10 is being used to inspect a vehicle, the first axis 32 may correspond to a central, longitudinal axis of the vehicle between the tracks of the wheels of the vehicle for example. Alternatively, as will be discussed below, the first axis may correspond to a central, transverse axis of the vehicle. In one form of the shuttle 12, the first part 18 is a trolley arranged to engage a guide or track 34. The trolley has one or more wheels 36 for engaging the track 34. The wheels may be driven by at least one electrical motor (not shown) to move the trolley along the track 34.

The second part 20 is engaged or engageable with the first part 18 via interconnecting members in the form of pivoting linkage arms or levers 38. The second part 20 is arranged to move relative to the first part 18 substantially along a horizontally-extending second axis 40. The first axis 32 is transverse to the second axis 40. Preferably, the first axis 32 is substantially perpendicular to the second axis 40. The second part 20 may be driven by at least one electrical motor (not shown) to move the second part 20, substantially along the second axis 40, relative to the first part 18.

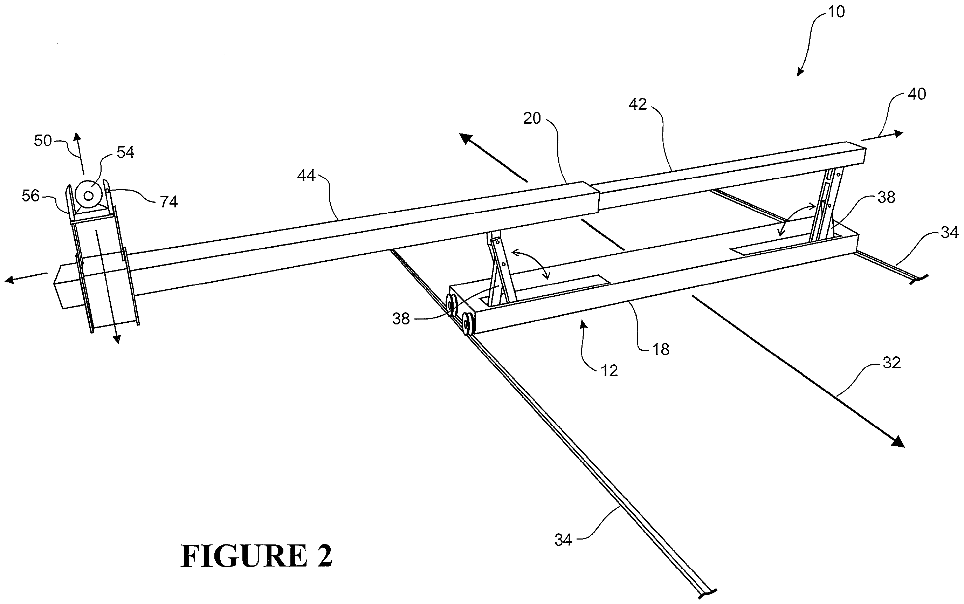

With reference to figures 2, 8 and 9, the second part 20 has first and second telescoping sections 42, 44 arranged relative to one another for telescoping movement of the second part 20 along the second axis 40 relative to the first part 18. The first section 42 is connected or coupled to the first part 18 by the arms 38. The second section 44 is in the form of a generally U-shaped channel member that is slidably engaged with the first section 42 to slide, substantially along the second axis 40, relative to the first section 42.

### Narrow and wide (or extended) configurations

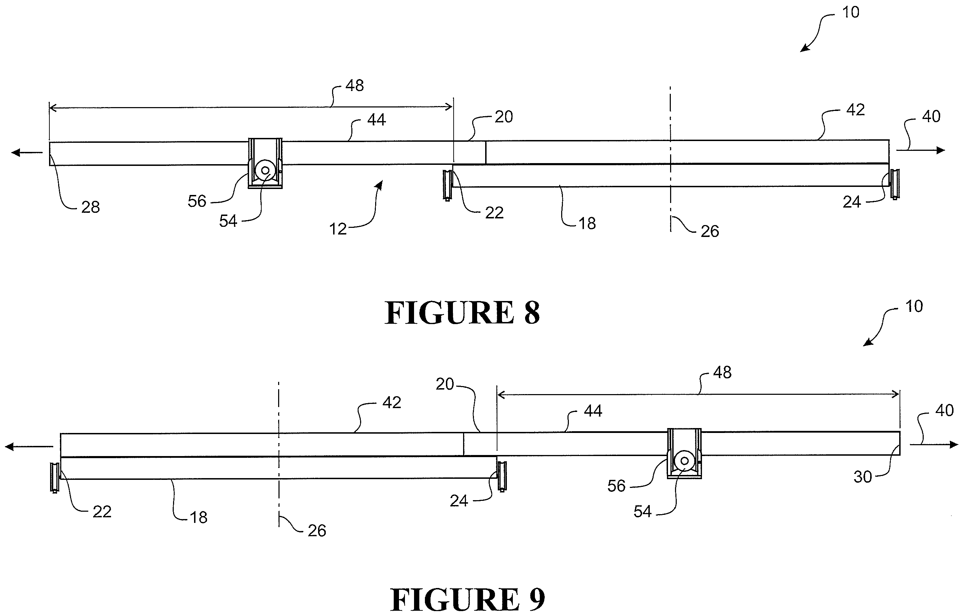

The shuttle 12 is movable between at least a narrow configuration shown in figures 1 and 3 to 7, and one or more wide or extended configurations shown in figures 2 and 8 to 11. The shuttle 12 may be moved to any configuration between the extended configurations shown in figures 8 and 9 and figures 10 and 11.

When the inspection device 10 is being used to inspect a vehicle, in the narrow configuration, the shuttle 12 is advantageously sufficiently narrow to move under a frame of a vehicle within the tracks of the wheels of the vehicle.

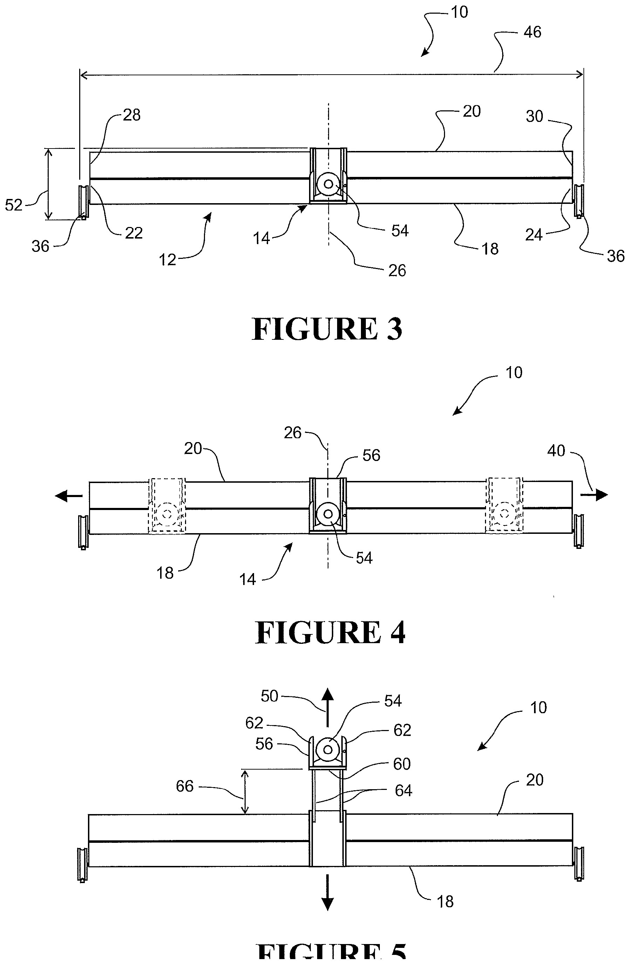

The width of the shuttle 12 (indicated by the reference number 46 in figure 3) in the narrow configuration shown in figures 1 and 3 to 7, including the wheels 36, is about 900mm. The length of the first part 18, measured from the first end 22 to the second end 24 along the second axis 40, may be about 900mm less the widths of the wheels 36, for example. The length of the first and second sections 42, 44 of the second part 20 in the narrow configuration may also be about 900mm less the widths of the wheels 36, for example. It will be understood the width 46 of the shuttle 12 in the narrow configuration could be greater or less to suit wider or narrower vehicles. Also the lengths of the first part 18 and the second part 20 could be different to one another. That is, the first part 18 could be longer than the second part 20, or the second part 20 could be longer than the first part 18.

In the wide condition(s) of the shuttle 12, the second section 44 of the second part 20 may extend to, over or beyond the wheel tracks of a vehicle being inspected. The second part 20 may be moved to extend outwards from the first part 18 by at least 600mm in each direction, for example, as indicated by the reference number 48 in figure 8 and the reference number 48 in figure 9.

In the wide configuration shown in figure 8, for example, the first end 28 of the second section 44 of the second part 20 is further away, in a direction along the second axis 40, from the middle 26 of the first part 18 than the first end 28 is in the narrow configuration. The first end 28 is also located beyond the first end 22 of the first part 18 in the direction along the second axis 40.

Alternatively, in the wide configuration of the shuttle 12 shown in figure 9, the second end 30 of the second section 44 of the second part 20 is similarly further away, in a direction along the second axis 40, from the middle 26 of the first part 18 than the second end 30 is in the narrow configuration. The second end 30 is also located beyond the second end 24 of the first part 18 in the direction along the second axis 40.

### Low and tall configurations

The second part 20 of the shuttle 12 is also arranged to move relative to the first part 18 substantially along a vertically-extending axis 50 so that the shuttle 12 is movable between at least a low configuration shown in figures 1, 3 to 5, 8 and 9, and a tall configuration shown in figures 2, 6, 7, 10 and 11. The shuttle 12 may be moved to any configuration between the low configuration shown in figures 1, 3 to 5, 8 and 9 and the fully-extended tall configuration shown in figures 2, 6, 7, 10 and 11. The second part 20 is movable relative to the first part 18 substantially along the vertically extending axis 50 by rotating the arms 38 about the first part 18, causing the second part 20 to move vertically away from or towards the first part 18. The rotation of the arms 38 may be driven by at least one electrical motor (not shown) to move the second part 20, substantially along the vertically-extending axis 50, relative to the first part 18.

In the low configuration shown in figures 1, 3, 4, 8 and 9, the overall height of the device 10 (indicated by the reference number 52 in figure 3) may be about 95mm or less, for example, so that the shuttle 12 can advantageously be moved along the ground under the frame of most vehicles when the shuttle 12 is in the low configuration. The minimum ground clearance of a vehicle in New Zealand is 100mm. Alternatively the overall height of the device 10 in the low configuration may be greater when the device 10 is used for vehicles with greater ground clearance.

In the tall configuration shown in figures 2, 6, 7, 10 and 11, the second part 20 may raised vertically relative to the first part 18 by at least 300mm (from the low configuration) to move the second part 20 closer to the vehicle when inspecting high ground clearance vehicles. The ground clearance of utility vehicles (or 'utes') and four wheel drive vehicles, for example, is typically about 200 mm to 250mm. The ground clearance of trucks is normally even larger.

### Camera module

The camera module 14 has a camera 54 in the form of a video camera. The camera 54 is arranged to take both video images and still images. When a vehicle is being inspected, the camera 54 is arranged to generate image data representing at least a part of an underbody of a vehicle. The camera module 14 is configured to transmit the image data in real-time to a remotely located system controller and/or user device.

The camera module 14 comprises a caddy 56 that holds the camera 54 relative to the second part 20 so the camera 54 is movable with the second part 20 relative to the first part 18. The caddy 56 has a body 58 slidably mounted on the second part 20, a platform 60, guards 62, and telescoping arms 64 for raising and lowering the platform 60 relative to the body 58. The camera 54 is mounted on the platform 60.

The guards 62 are located on sides of the camera 54 and preferably extend to at least the height of the camera 54 to protect the camera 54. The inspection device 10 may further comprise sensors (not shown) on or near the guards 62. When inspecting a vehicle with the inspection device 10, if the sensors detect the guards 62 colliding with the vehicle, the sensors may be configured to transmit an error signal to a system controller to stop movement of the inspection device. The sensors may also be configured to trigger an alarm, such as an audible or visual alarm. The sensors on or near the guards 62 may be arranged to detect contact with the vehicle when the camera 54 is moving horizontally, in substantially any horizontally-extending direction, or upwardly towards the vehicle.

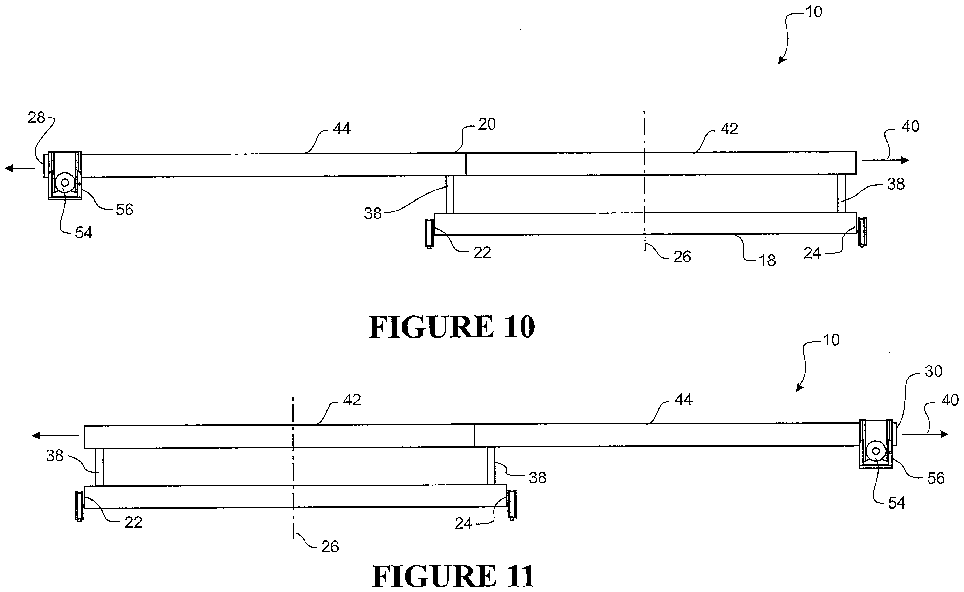

The caddy 56 is arranged to slidably move relative to the second part 20 substantially along the second axis 40, so as to move the camera 54 with the caddy 56 relative to the second part 20. The camera 54 is movable, substantially along the second axis 40, between a first position at or near the first end 28 of the second section 44 of the second part 20 (shown in figure 10) and a second position at or near the second end 30 of the second section 44 of the second part 20 (shown in figure 11). The camera 54 may be moved relative to the second part 20 along the second axis 40 to any position between the first position (figure 10) and the second position (figure 11). When a vehicle is being inspected, this movement enables the camera 54 to be traversed at least about 2,100mm, for example, from one side/end to the other side/end of the vehicle. The caddy 56 may be driven by at least one electrical motor (not shown) to move the caddy 56, substantially along the second axis 40, relative to the second part 20.

The caddy 56 is also arranged to move the camera platform 60, substantially along a vertically-extending axis 50, relative to the second part 20 by retracting and extending the telescoping arms 64. The arms 64 may be retracted and extended by at least one electrical motor (not shown). The camera platform 60 is movable to move the camera 54 between a retracted position shown in figures 1, 3, 4 and 7 to 11 in which the camera 54 is located substantially below a top or top region of the second part 20, and an extended position shown in figures 2, 5 and 6 in which the camera 54 is located substantially above the top or top region of the second part 20. The camera platform 60 may be moved to any position between the retracted position (figure 3) and the raised position (figure 5). During inspection of a vehicle, for example, the camera 54 may be moved vertically relative to the second part 20 towards or away from a part of an underbody of the vehicle. The platform 60 may be raised by up to 200mm relative to the second part 20, as indicated by the reference number in 66 in figure 5. Raising the platform 60 relative to the second part 20 enables the camera 54 to be positioned in between the components of a vehicle so an inspector can visually inspect the performance of components, such as the performance of components under braking. Such inspections may not be possible when manually inspecting the vehicle using existing techniques because of safety and other reasons. The ability to raise the camera 54 may also facilitate other exploratory inspection.

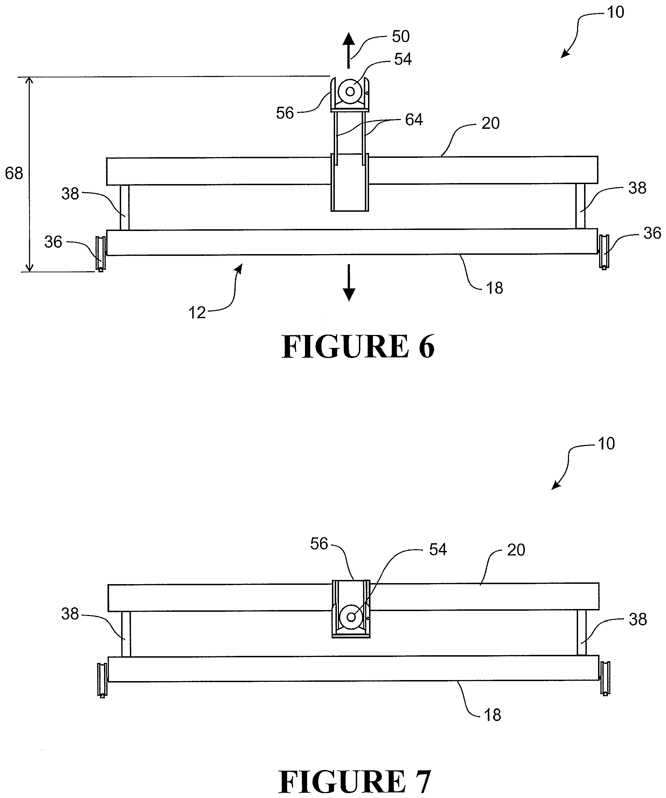

In total, the camera 54 may be positioned at least 600mm, for example, above ground level for the inspection of vehicle underbody components and structure, as generally indicated by the reference number 68 in figure 6.

### Pan, tilt and zoom

With reference to figure 12, the video camera 54 is a pan-tilt-zoom (PTZ) camera. The camera 54 is rotatably mounted on the platform 60, so the device controller can operate the camera 54 to rotate relative to the second part 20 both about a generally vertically-extending axis 70 (pan) and a generally horizontally-extending axis 72 (tilt). In one form of the camera module 14, the camera 54 can pan continuously clockwise or counter-clockwise around the generally vertically-extending axis 70. There may no limit to the number of rotations about the vertically-extending axis 70. The camera 54 may be arranged to tilt down from the horizontal by at least about 45 degrees, for example, and up from the horizontal by at least about 90 degrees, for example. The camera 54 is also arranged to zoom in and out. The camera module 14 comprises one or more electrical motor(s) (not shown) for panning, tilting and zooming the camera 54.

The inspection device 10 may also have one or more lights (not shown) for illuminating an underbody of a vehicle during an inspection of the vehicle. The lights may be light emitting diodes (LEDs), for example. The lights may be mounted to the caddy 56 adjacent to the camera 54 to provide light and to also focus an inspector's eyes on the components or structure that the camera 54 is pointed at.

### Tyre tread module

The tyre tread module 16 comprises a tyre tread gauge or probe 74 for measuring the tread depth of each wheel of a vehicle being inspected. The tyre tread gauge may be a mechanical gauge or an optical gauge that is configured to optically scan the tyre, for example. The tyre tread gauge 74 is mounted to and movable with the camera caddy 56. Alternatively, the tyre tread gauge 74 may mounted to (and movable with) the second part 20, for example.

The tyre tread module 16 is configured to generate tyre tread data representing a tread depth of each tyre. The tyre tread module 16 may also be configured to transmit the tread data to a system controller and/or a user device.

Instead of the tyre tread module 16 automatically determining and transmitting tyre tread data, alternatively the camera 54 may be used to record the tyre tread depth. The tyre tread gauge 74 may have an indicator (not shown) that visually indicates the measured tread depth. When inspecting a vehicle, the inspector can remotely move the inspection device 10 and operate the camera 54. The inspector can position the tyre tread gauge 74 relative to a tyre, using the camera 54 to ensure that the gauge 74 is positioned correctly. The inspector can then take a still image of the indicator showing the reading of the tread gauge 74 with the camera 54. The camera module 14 can then transmit the image data that is representative of the tyre tread depth reading to a system controller and/or a user device.

### Microphone module

The microphone module (not shown) comprises a microphone and is configured to generate audio data representing sound emanating from a vehicle during inspection of an underbody of the vehicle. The microphone module is further configured to transmit the audio data to a system controller and/or a user device. The microphone may be mounted to the caddy 56, for example, so the microphone is close to the camera 54.

When testing a vehicle, the microphone can pick up noises created by worn suspension components, worn wheel bearings and steering components, for example. The microphone may also pick up exhaust system leaks.

### Power supply (which is not part of the invention)

The inspection device 10 may comprise its own power supply (not shown) for supplying power to the inspection device 10, including the device controller, the electric motors, the camera module 14, the light(s), the tyre tread module 16, and the microphone module. The power supply may be a rechargeable battery, for example.

Advantageously, the power supply, the electric motors for moving the shuttle 12 and moving the caddy 56 relative to the shuttle 12, and the device controller are all substantially housed within the first and/or second parts 18, 20. Alternatively, one or more of the power supply, any electric motors and the device controller may be substantially located outside, or at least partly outside, of the first and/or second parts 18, 20. The device controller may include electronics for transmitting and receiving data and and/or control signals to control operation of the electric motors, the camera module 14, the light(s), the tyre tread module 16 and the microphone module. It will be understood that aspects of the device controller, the camera module 14, the tyre tread module 16 and the microphone module may be at least partly implemented by an integrated unit and/or share components.

Alternatively or additionally, the inspection device 10 may be coupled or couplable to an external power supply via a cable (not shown).

### Inspection system

With reference to figure 13 to 16, a system 80 for inspecting an underbody of a vehicle comprises the inspection device 10, a system controller 82, at least one user device 84, and a wheel roller bed 86.

### System controller

The system controller 82 is configured to control the operation of the inspection device 10, including movement of the inspection device 10, when inspecting a vehicle. The system controller 82 is connected to the device controller of the inspection device 10 via at least one communications network. In one form of the system, the system controller 82 may be located remotely of the inspection device 10. Alternatively, at least part of the system controller 82 may be physically located on or within the shuttle 12 for example, and/or share components with and/or comprise the device controller for example.

The system controller 82 is configured to receive image data from the camera module 14. The system controller 82 may also be configured to receive tread depth data from the tyre tread module 16, and/or audio data from the microphone module.

The system controller 82 comprises a server 88 connected to computer memory 90 configured to store data, such as image data. The server 88 may also be configured to store tread depth data and/or audio data in the computer memory 90. The computer memory 90 may be a database, for example. The server 88 may be configured to receive image data representing at least a part of an underbody of one or more vehicles from the camera module 14 of the inspection device 10 over a period of time, and to store the image data in the computer memory 90.

### User device(s)

The user device 84 is connected or connectable to the server 88 via the at least one communications network. The user device 84 has a display (not shown) on which an inspector or other user can view in real-time images corresponding to image data representing the underbody of a vehicle. The user device 84 also has a speaker (not shown). The at least one user device 84 may comprise, for example, one or more of a desktop computing device, a laptop, a tablet and a smart phone device. Alternatively, the user device 84 may comprise another computing device, such as purpose-built computing device.

The at least one communications network between the device controller, the system controller and the user device may be any suitable wired or wireless communications network or combination of wired or wireless networks. For example, the communications networks may comprise a cellular network, a data bus, or any other computer structure. Examples of communications networks include a local area network, a wide area network, the Internet, or a combination of networks.

The server 88 which is not part of the invention is configured so an inspector can access the server 88, using the user device 84, from a location remote from the inspection device 10. The server 88 may configured so that the user device 84 can access the server 88 via a web interface, for example.

The server 88 and the user device 84 are configured so an inspector can use the user device 84 to remotely control operation of the device controller, control operation of the inspection device 10, and/or view image data of the underbody of the vehicle from the inspection device 10. The inspector may be located in the driver's seat of the vehicle, for example, so the inspector can operate the vehicle while viewing images of the underbody of the vehicle on the user device 84.

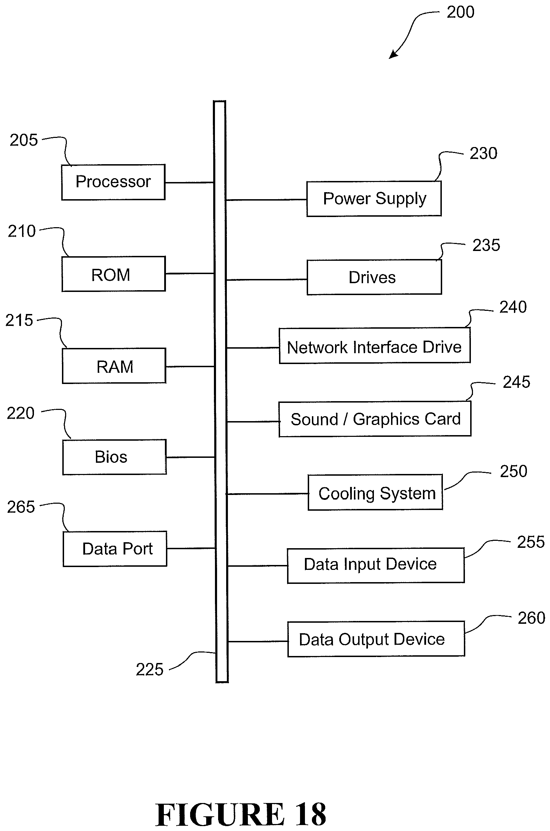

Figure 18 shows a simplified block diagram of an example form of a computing device 200 that may form at least part of the server 88 and/or the user device 84.

Sets of computer executable instructions are executed within device 200 that cause the device 200 to perform the methods described above. Preferably the computing device 200 is connected to other devices. Where the device is networked to other devices, the device is configured to operate in the capacity of a server or a client machine in a server-client network environment. Alternatively the device can operate as a peer machine in a peer-to-peer or distributed network environment. The device may also include any other machine capable of executing a set of instructions that specify actions to be taken by that machine. These instructions can be sequential or otherwise.

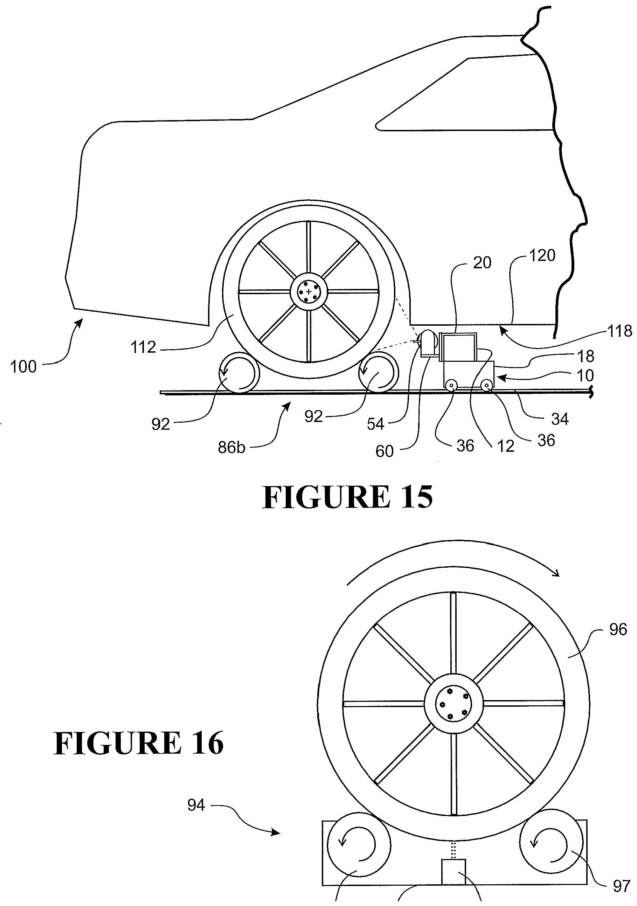

A single device 200 is shown in figure 15. The term 'computing device' includes any collection of machines that individually or jointly execute a set or multiple sets of instructions to perform any one or more of the methods described above.

The example computing device 200 includes a processor 205. One example of a processor is a central processing unit or CPU. The device further includes read-only memory (ROM) 210 and random access memory (RAM) 215. Also included is a Basic Input/Output System (BIOS) chip 220. The processor 205, ROM 210, RAM 215 and the BIOS chip 220 communicate with each other via a central motherboard 225.

Computing device 200 further includes a power supply 230 which provides electricity to the computing device 200. Power supply 230 may also be supplemented with a rechargeable battery (not shown) that provides power to the device 200 in the absence of external power.

Also included are one or more drives 235. These drives include one or more hard drives and/or one or more solid state flash hard drives. Drives 235 also include optical drives.

Network interface device 240 includes a modem and/or wireless card that permits the computing device 200 to communicate with other devices. Computing device 200 may also comprise a sound and/or graphics card 245 to support the operation of the data output device 260 described below. Computing device 200 further includes a cooling system 250 for example a heat sink or fan.

Computing device 200 includes one or more data input devices 255. These devices include a keyboard, touchpad, touchscreen, mouse, and/or joystick. The device(s) take(s) input from manual keypresses, user touch with finger(s) or stylus, spoken commands, gestures, and/or movement/orientation of the device.

Data output device(s) 260 include(s) a display and/or printer. Device(s) 260 may further include computer executable instructions that cause the computing device 200 to generate a data file such as a PDF file.

Data port 265 is able to receive a computer readable medium on which is stored one or more sets of instructions and data structures, for example computer software. The software causes the computing device 200 to perform one or more of the methods or functions described herein. Data port 265 includes a USB port, Firewire port, or other type of interface. The computer readable medium includes a solid state storage device. Where drives 235 include an optical media drive, the computer readable medium includes a CD-ROM, DVD-ROM, Blu-ray, or other optical medium.

Software may also reside completely or at least partially within ROM 210, within erasable non-volatile storage and/or within processor 205 during execution by the computing device 200. In this case ROM 210 and processor 205 constitute computer-readable tangible storage media. Software may further be transmitted or received over a network via network interface device 240. The data transfer uses any one of a number of well known transfer protocols. One example is hypertext transfer protocol (http).

### Wheel roller bed

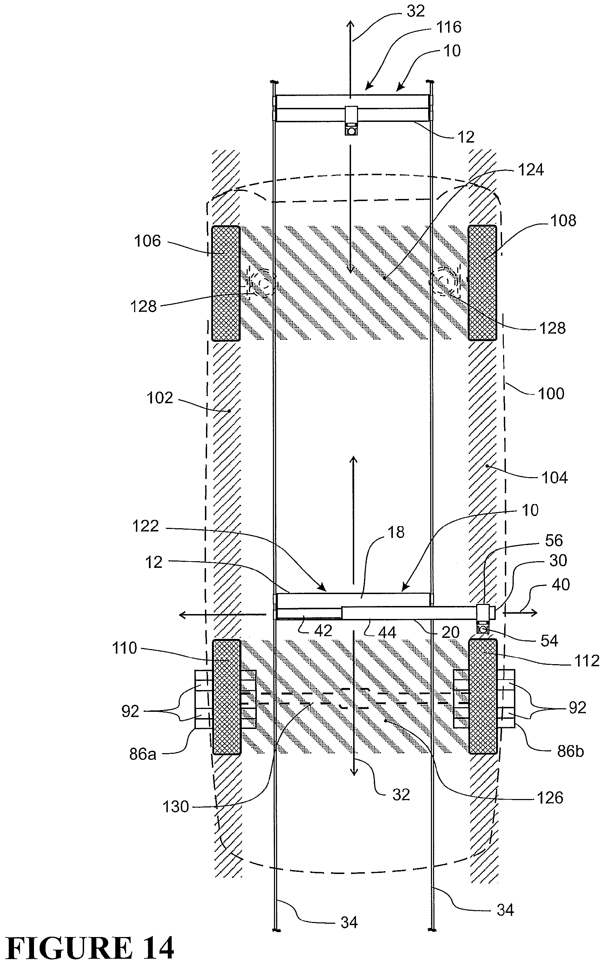

With reference to figures 14 and 15, the wheel roller bed 86 has rollers 92 that are configured to rotate at least one wheel of a vehicle. The wheel roller bed 86 has two sets 86a, 86b of rollers 92 arranged to rotate wheels on either side of an axle (not shown). When inspecting a vehicle, the wheel roller bed 86 may be configured to rotate wheels of the vehicle on the rollers 92 at a predetermined speed.

The system controller 82 may be connected to the wheel roller bed 86, and configured to control operation of the wheel roller bed 86 during inspection of a vehicle. In one form of the system, the system controller 82 may be configured so an inspector using the user device 84 can remotely control the operation including the speed of the wheel roller bed 86 during the inspection.

The wheel roller bed 86 can be operated remotely to enable the inspection of the whole circumference of the tyre. The wheel roller bed 86 can rotate wheels of the vehicle at a predetermined speed so that a remotely located inspector can view the whole circumference of the tyre for defects with the camera 54. Using the user device 84, an inspector or other user can control the speed of the wheel roller bed 86, and stop the wheel roller bed 86 if necessary for a detailed inspection of specific tyre defects.

A side view of a set of rollers 94a of an alternative wheel roller bed 94 for automatically recording tread depth of a tyre 96 is shown in figure 16. The wheel roller bed 94 comprises rollers 97 for rotating the tyre 96. The wheel roller bed 94 also comprises a tyre tread gauge 98 for automatically measuring the tread depth as the tyre 96 is rotated by the rollers 97. The tyre tread gauge may be an optical gauge that uses reflected light to measure the tyre tread depth. The tyre tread gauge 98 is advantageously configured to measure the tread depth of the tyre 96 over a plurality of points across the width of the tyre 96 and around the circumference of the tyre 96, such as by scanning across the tyre 96 as the tyre 96 is rotated. The measured tread depth data may then be automatically transmitted to the system controller 82. Advantageously the server 88 is configured to store the tread depth data, and an inspector can access the data using the user device 84.

### Shuttle track

The system 80 may also comprise a guide or track 34 that extends substantially along the horizontally-extending first axis 32 of the inspection device 10. The inspection device 10 is engaged or engaeable with the track 34 so that the first part 18 of the inspection device 10 moves substantially along the first axis 18 on a surface under a frame of a vehicle by traversing along the track 34.

As shown in figures 13 and 14 the track 34 may be mounted to the ground, such as a flat floor of an inspection station or a garage, so the first axis 32 is aligned with a central, longitudinal axis of a vehicle being inspected. The track 34 may be secured to the ground. The track 34 has two spaced apart track rails, but it will be understood the track 34 may have one or more rails. The track 34 may extend typically for at least 3 to 4 metres, for example, so the inspection device 10 can travel the full length of a vehicle being inspected.

Alternatively, the track 34 could be mounted over a pit (not shown) where the pit has already been fitted. This arrangement would allow much higher vertical movements of the inspection device 10 to be achieved.

### Inspection method

A first method of inspecting an underbody of a stationary vehicle 100 in the form of a car using the system 80, including the inspection device 10, will now be described with reference to figures 14 and 15. The underbody may include, for example, the wheels, the tyres, structural components, suspension components, steering components and the exhaust system.

The vehicle 100 (shown in outline) is positioned so the track 34 along which the shuttle 12 runs is located between the tracks 102, 104 (indicated by hatching) of wheels 106, 108, 110, 112 of the vehicle 100. The tyres (also indicated using the reference numbers 106, 108, 110 and 112, and shown in solid) of the vehicle 100 travel along the wheel tracks 102, 104 when the vehicle 100 is driven directly forwards or backwards.

The wheel tracks 102, 104 are generally aligned with a horizontally-extending, central longitudinal axis (also reference number 32) of the vehicle 100. The rear wheels 110, 112 of the vehicle 100 are located over the wheel roller bed 86. The inspection device 10 is initially located in a first, home position, generally indicated by the reference number 116, in front of the vehicle 100. The shuttle 12 is initially in the narrow and low configuration with the camera 54 in the retracted position, as shown in figures 1, 3 and 4.

The inspection device 10 can be remotely controlled by the inspector, using the user device 84, to inspect an underbody 118 of the vehicle 100. The inspector may be located remotely of the inspection device 10, such as in the driver's seat of the vehicle 100 so as to also operate the vehicle 100 during the inspection. The inspector can view video and still images captured by the camera 54 on the display of the user device 84, in real-time, while operating the device 10. When the inspection is completed, the inspection device 10 may be automatically configured to return to the home position 116. In the home position 116, the inspection device 10 may be automatically couplable to an external power supply to recharge an internal power supply of the inspection device 10. The external power supply may be located at or near the system controller 80, for example.

To inspect the underbody 118, the shuttle 12 is moved from the home position 116, on the track 34 along the first axis 32 that corresponds to the longitudinal axis of the vehicle 100. In the narrow configuration, the inspection device 10 can move along the ground under a frame 120 of the vehicle 100 and between the wheel tracks 102, 104 of the vehicle 100.

The inspection device 10 may be moved around to various positions under the frame 120 to inspect components of the underbody 118 of interest. To inspect the tread of the rear tyre/wheel 112 for example, the shuttle 12 may be moved to a second, inspection position generally indicated by the reference number 122. The shuttle 12 is moved beyond a front region (indicated by the hatched area 124 in figure 14) between the front tyres/wheels 106, 108, to the inspection position 122 that is generally located intermediate the front region 124 and a rear region (indicated by the hatched area 126 in figure 14) between the rear tyres/wheels 110, 112. The front region 124 extends between the opposed front tyres/wheels 106, 108 and transversely to the axis 32. The rear region 126 similarly extends between the opposed rear wheels 110, 112 and transversely to the axis 32. The axles 128 of the front wheels 106, 108 and axle 130 of the rear wheels 110, 112 are indicated schematically in outline generally above the regions 124, 126.

In the inspection position 122, between the front and rear regions 124, 126, the inspection device 10 can be moved to a wide or extended configuration (similar to the wide configuration of the shuttle 12 shown in figure 9) without colliding with the tyres/wheels 108, 112. The inspection device 10 is moved to the wide configuration by moving the second part 20 of the shuttle 12, relative to the first part 18, along a second horizontally-extending axis 40 that extends transversely to the first axis 32. Preferably, the second axis 40 extends substantially orthogonally to the first axis 32. The second part 20 moves towards a side of the vehicle 100 along the second axis 40 by telescoping, relative to the first part 18.

The caddy 56 is also moved relative to the second part 20 along the second axis 40 to move the camera 54 towards the tyre/wheel 112. The camera 54 is moved from at or near a middle of the second part 20 in the home position 116, to at or near the second end 30 of the second part 20 in the inspection position 122.

A side view of the rear wheel 112 with the inspection device 10 in the inspection position 122, under the frame 120 of the vehicle 100, is shown in figure 15. The camera 54 of the inspection device 10 is focused on the tyre 112.

In the wide configuration of the shuttle 12 of the inspection device 10 at the inspection position 122, the second part 20 extends over and/or beyond the wheel track 104 of the wheels 108, 112, without colliding with the tyres/wheels 108, 112. The second end 30 of second section 44 of the second part 20 is further away, in a direction along the second axis 40, from the middle 26 of the first part 18 than the second end 30 of the second part 20 is when the shuttle 12 is in the narrow configuration shown at the first, home position 116. In figure 14, the shuttle 12 is arranged so that the middle 26 of the first part 18 generally corresponds to the central longitudinal axis 32 of the vehicle 100. The second end 30 is also located beyond the second end 24 of the first part 18 in the direction along the second axis 40 (as shown in figure 9).

If necessary, the camera 54 of the inspection device 10 can be moved vertically towards or away from the vehicle 100 by moving the second part 20, relative to the first part 18, substantially along a vertically extending axis 50. For example, the shuttle 12 could be moved from the low configuration shown in figure 9 to the tall configuration shown in figure 11.

The camera 54 of the inspection device 10 can also be moved vertically towards or away from the vehicle 100 by raising or lowering the platform 60 on which the camera 54 is mounted. For example, the platform 60 may be raised from the retracted position of the camera 54 shown in figure 3, to the extended position shown in figures 2, 5 and 6.

The inspector may pan or tilt the camera 54 to point the camera 54 at other components of interest. The inspector may also zoom the camera 54 in on or away from a component of interest.

During inspection of the vehicle 100, the camera 54 can be controlled remotely using the user device 84. The camera module 14 can be configured to start capturing video and/or still images of the underbody 118 of the vehicle 100 at the start of the inspection process and to finish at the end of the inspection process. The generated image data, in the form of the captured video and/or still images, can optionally be processed by the server 88 and transmitted to the remotely located user device 84 so the inspector can view video and/or still images of the underbody 118 on the user device's display. Image data of components of underbody 118 that need further attention or repair can be recorded. For example, image data may be automatically stored by the system controller 82 in the database 90 so that the image data can be retrieved at a later date for purposes such as auditing, training, or claims verification. Alternatively, the system controller 82 may be configured to record the image data on a separate video recorder for later retrieval.

The inspector can remotely operate the roller wheel bed 86 to rotate the wheels 106, 108, 110, 112 of the vehicle 100 so the inspector can view the whole circumference of the tyre of each wheel for defects, The inspector can manipulate the inspection device 10 to position the camera 54 outside or inside the tyre wall as each wheel 106, 108, 110, 112 is being rotated. The inspector can also use the camera 54 to accurately position the tread gauge 74 relative to a tyre of each wheel 106, 108, 110, 112 of the vehicle 100. Using the camera 54 , the inspector can view the tread gauge 74 to ensure that it is positioned correctly before taking a reading of the tyre tread. The tyre tread measurements can be recorded by the system 80 so that they can be retrieved later. For example, the tyre tread measurements may be stored in the database 90. Alternatively, wheel roller bed 94 (shown in figure 16) may be used to automatically determine and record the tread depths of the tyres.

As the vehicle 100 is being inspected, the microphone module is configured to generate and transmit audio data representing sound emanating from the vehicle 100. During the inspection, an inspector can listen to sound from the underbody 118 on the speaker of the user device 84. The sound from the underbody 118 may enable the inspector to locate exhaust leaks, air leaks and mechanical defects, for example. The transmitted audio data may be stored by the system 80 with the corresponding image data so that that the audio data can also be retrieved later.

In figure 14, the shuttle 12 is shown in a wide or extended configuration at the inspection position 122 intermediate the front tyre/wheel 108 and the rear tyre/wheel 112. However, it will be understood that alternatively the shuttle 12 could be moved to a wide or extended configuration in a position in front of the front tyres/wheels 106, 108 to inspect the tread of one of the front tyres 106, 108 from in front for example. The shuttle 12 may be moved to one of the wide or extended configurations shown in figures 2 and 8 to 11 for example. Alternatively, the shuttle 12 could be moved to a wide or extended configuration in a position after the rear tyres 110, 112 to inspect the tread of one of the rear tyres/wheels 110, 112 from behind. The camera 54 may be rotated 180 degrees relative to the second part 20 to point back towards the tyre/wheel 110 (or 112).

The remotely operable inspection device 10 has a number of advantages. The inspection device 10 can significantly reduce the time taken to inspect the underbody 118 of the vehicle 100. The inspection device 10 advantageously enables the underbody 118 to be inspected by a single inspector with no assistance, because the inspection device 10 makes it possible for the inspector to remotely and safely view the underbody 118 while operating the vehicle 100, such as from the driver's seat, at the same time. The inspection device 10 can also be used to automatically record vehicle inspections or parts of vehicle inspections, including video and still images of the underbody 118, so that information can be readily accessed later. Preferred embodiments of the invention have been described by way of example only and modifications may be made thereto without departing from the scope of the invention.

For example, the description includes ranges of movements. A person skilled in the art will recognise that the ranges of movements have been included in the description to assist a person skilled in the art in putting into practice exemplary embodiments of the invention, and not as a limitation on the invention as defined in the presently appended claims. For example, it will be understood the words vertical and horizontal, and variations thereof, have been used to describe the movements or orientation of parts of the inspection device 10 when the inspecting device is arranged in its normal orientation to inspect a vehicle.

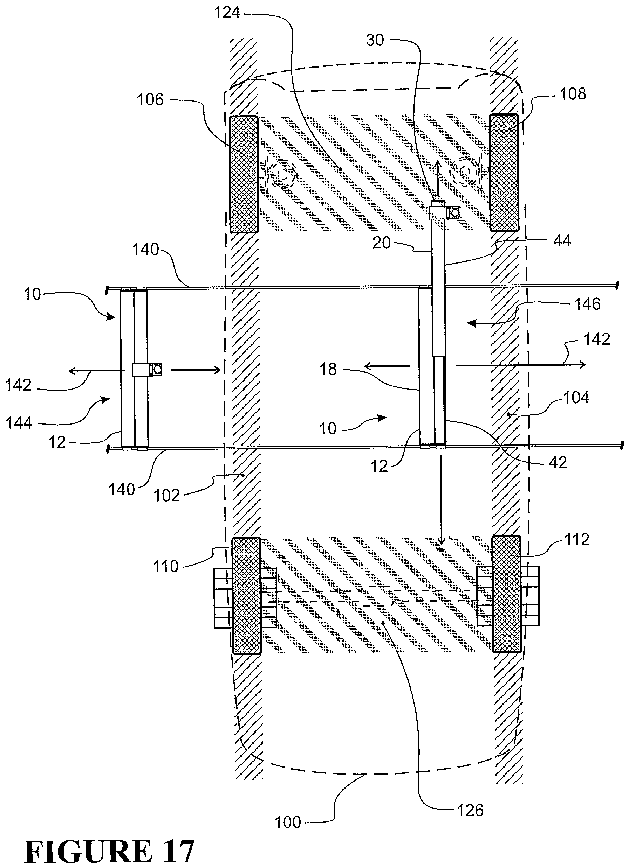

Further, the inspection device 10 has been described above as moving on a track 34 along a longitudinal axis 32 of the vehicle. However, with reference to figure 17, it will be understood the inspection device 10 could alternatively move on a track 140 on an axis 142 that extends transversely to the longitudinal axis of the vehicle 100. The axis 142 may be substantially perpendicular to the longitudinal axis of the vehicle for example. The inspection device may be initially located in a home position generally indicated by the reference number 144, to the side of the vehicle 100. To inspect the inside wall of the tyre/wheel 108, for example, the inspection device 10 may move along the track 140 to an inspection position generally indicated by the reference number 146. The inspection device 10 is moved to the inspection position 146 by moving under the frame 120, between the adjacent wheels 106, 110 on one side of the vehicle 100, through the wheel track 102 of the adjacent wheels 106, 110. In the inspection position 146, intermediate the wheel tracks 102, 104, the inspection device 10 can be moved to a wide or extended configuration (similar to the wide configuration of the shuttle 12 shown in figure 9) without colliding with the tyres/wheel 106, 108. In the wide configuration shown in figure 17, the second end 30 of the second part 20 can be moved extend into and/or beyond the front region 124 between the tyres/wheels 106, 108, without colliding with the tyres/wheels 106, 108.

## Claims

1. A remotely operable inspection device (10) for inspecting an underbody (118) of a vehicle (100), the inspection device (10) comprising:
a device controller configured to control operation of the inspection device (10);
a shuttle (12) having first and second parts (18, 20), the first part (18) arranged to move substantially along a horizontally-extending first axis (32) on a surface under a frame (120) of a vehicle (100), the second part (20) engaged or engageable with the first part (18) and at least part (44) of the second part (20) being arranged to move relative to the first part (18) substantially along a horizontally-extending second axis (40), the first axis (32) being transverse to the second axis (40),
the shuttle (12) having at least a narrow configuration when moving the shuttle (12) under a frame (120) of a vehicle (100), and an extended configuration when inspecting an underbody (118) of a vehicle (100), and
the first and second parts (18, 20) being arranged so that, in the extended configuration:
a first end (28, 30) of the second part (20) is further away, in a direction along the second axis (40), from a middle (26) of the first part (18) than the first end (28, 30) of the second part (20) is in the narrow configuration, and
the first end (28, 30) of the second part (20) is located beyond an end (22, 24) of the first part (18) in the direction along the second axis (40); and
a camera module (14) having a camera (54) and being configured to generate image data representing at least a part of an underbody (118) of a vehicle (100), the camera (54) being movable with the second part (20) relative to the first part (18).

2. An inspection device (10) as claimed in claim 1, wherein the camera module (14) is configured to transmit image data via at least one communications network.

3. An inspection device (10) as claimed in claim 1 or claim 2, wherein the second part (20) is arranged to move relative to the first part (18) substantially along a vertically-extending axis (50) so as to move the camera (54) vertically towards or away from at least a part of an underbody (118) of a vehicle (100).

4. An inspection device (10) as claimed in claim 1 or claim 2, wherein the camera module (14) comprises a caddy (56) that holds the camera (54) relative to the second part (20), the caddy (56) being arranged to move relative to the second part (20) substantially along a vertically-extending axis (50) so as to move the camera (54) vertically towards or away from at least a part of an underbody (118) of a vehicle (100),
preferably wherein the caddy (56) is arranged to move substantially along the vertically-extending axis (50) so as to move the camera (54) between at least a retracted position in which at least a part of the camera (54) is substantially below a top region of the second part (20) and a raised position in which the part of the camera (54) is substantially above the top region of the second part (20).

5. An inspection device (10) as claimed in any one of claims 1 to 3, wherein the camera module (14) comprises a caddy (56) that holds the camera (54) relative to the at least part (44) of the second part (20), the caddy (56) being arranged to move relative to the second part (20) substantially along the second axis (40) so the camera (54) is movable relative to the at least part (44) of the second part (20) substantially along the second axis (40),
preferably wherein the camera (54) is movable, substantially along the second axis (40), between a first position at or near the first end (28, 30) of the at least part (44) of the second part (20) and a second position at or near a second end of the at least part (44) of the second part (20).

6. An inspection device (10) as claimed in any one of claims 1 to 5, wherein the camera (54) has a generally vertically-extending pan axis, and
the camera (54) is configured to rotate relative to the second part (20) about the pan axis,
preferably wherein the camera (54) has a generally horizontally-extending tilt axis, and
the camera (54) is configured to rotate relative to the second part (20) about the tilt axis,
preferably wherein the camera (54) is arranged to zoom in and out, and/or
preferably comprising at least one guard (62) arranged to protect the camera (54) from colliding with a vehicle (100) when the inspection device (10) is moving,
preferably comprising at least one sensor arranged on or near the guard (62), the sensor being configured to detect if the guard (62) collides with a vehicle (100) when the inspection device (10) is moving.

7. An inspection device (10) as claimed in any one of claims 1 to 6, comprising a tyre tread gauge (74) for measuring a tread depth of at least a part of a tyre (106, 108, 110, 112) of a vehicle (100),
preferably comprising a tyre tread module (16) configured to generate tread data representing the measured tread depth;
wherein the tyre tread module (16) comprises the tyre tread gauge (74), and
the tyre tread module (16) is configured to transmit the tread data via at least one communications network,
preferably wherein the tyre tread gauge (74) has an indicator that visually indicates the measured tread depth, and the camera module (14) is configured to generate image data representing the measured tread depth shown on the indicator, and configured to transmit the image data representing the measured tread depth,
preferably wherein the tyre tread gauge (74) is mounted to the second part (20).

8. An inspection device (10) as claimed in any one of claims 1 to 7, comprising a microphone module having a microphone configured to generate audio data representing sound emanating from a vehicle (100) during inspection of an underbody (118) of a vehicle (100), the microphone module being configured to transmit the audio data via at least one communications network.

9. An inspection device (10) as claimed in any one of claims 1 to 8, wherein the first part (18) comprises a trolley, the trolley being arranged to engage a track (34) that extends substantially along the first axis (32),
preferably wherein the trolley has at least one wheel (36) that is arranged to engage the track (34) that extends substantially along the first axis (32).

10. An inspection system configured to inspect an underbody (118) of a vehicle (100), the system comprising:
an inspection device (10) as claimed in any one of claims 1 to 9;
a system controller (82) configured to control operation of the inspection device (10), the system controller (82) comprising or being connected to the device controller, the system controller (82) being configured to receive at least image data representing at least a part of an underbody (118) of a vehicle (100) from the camera module (14) of the inspection device (10); and
at least one user device (84) connected to the system controller (82) via at least one communications network,
preferably wherein the system controller (82) is configured so an inspector can control operation of the inspection device (10) using the user device (84), from a location remote from the inspection device (10),
preferably wherein the user device (84) comprises a display, and the system controller (82) is configured so an inspector can view on the display, from a location remote from the inspection device (10), one or more images corresponding to image data representing at least a part of an underbody (118) of a vehicle (100) received from the inspection device (10).

11. An inspection system as claimed in claim 10, comprising a wheel roller bed (86) configured to rotate at least one wheel (106, 108, 110, 112) of a vehicle (100),
preferably wherein the system controller (82) is connected to the wheel roller bed (86) and configured to control operation of the wheel roller bed (86) during inspection of an underbody (118) of a vehicle (100),
preferably wherein the system controller (82) is configured so that an inspector can control operation of the wheel roller bed (86) using the user device (84), from a location remote from the inspection device (10),
preferably wherein the system controller (82) is configured so an inspector can control a speed of the wheel roller bed (86) using the user device (84), from a location remote from the inspection device (10),
preferably wherein the wheel roller bed (86) comprises a tyre tread gauge (74) arranged to measure the tread depth of a tyre (106, 108, 110, 112) as the tyre is being rotated by the wheel roller bed (86), the tyre tread gauge (74) being configured to transmit tyre tread data representing the measured tread depth to the system controller (82).

12. A method of inspecting an underbody (118) of a vehicle (100) using an inspection device (10), the inspection device (10) comprising:
a remotely operable device controller configured to control operation of the inspection device (10);
a shuttle (12) having first and second parts (18, 20), the first part (18) arranged to move substantially along a horizontally-extending first axis (32) on a surface under a frame (120) of the vehicle (100), the second part (20) engaged or engageable with the first part (18) and at least part (44) of the second part (20) being arranged to move relative to the first part (18) substantially along a horizontally-extending second axis (40), the first axis (32) being transverse to the second axis (40),
the shuttle (12) having at least a narrow configuration when moving the shuttle (12) under a frame (120) of a vehicle (100), and an extended configuration when inspecting an underbody (118) of a vehicle (100), and
a camera module (14) having a camera (54) and being configured to generate image data representing at least a part of an underbody (118) of a vehicle (100), the camera (54) being movable with the second part (20) relative to the first part (18);
wherein the method comprises:
with the shuttle (12) in the narrow configuration, moving the shuttle (12) under the frame (120) of the vehicle (100) along the first axis (32), substantially between wheel tracks (102, 104) of the vehicle (100);
moving the shuttle (12) from the narrow configuration to the extended configuration by moving the at least part (44) of the second part (20) relative to the first part (18) substantially along the second axis (40) so that a first end (28, 30) of the second part (20) substantially extends over one of the wheel tracks (102, 104) of the vehicle (100); and
with the shuttle (12) in the extended configuration, generating image data representing at least a part of the underbody (118) of the vehicle (100).

13. A method as claimed in claim 12, wherein moving the shuttle (12) under the frame (120) of the vehicle (100) along the first axis (32) comprises moving the shuttle (12) under the frame (120) of the vehicle (100) along a longitudinally-extending axis of the vehicle (100), so the at least part of the second part (20) is located substantially beyond at least a first region that extends between opposed wheels (106, 108, 110, 112) of the vehicle (100) and transversely to the longitudinally-extending axis.

14. A method of inspecting an underbody (118) of a vehicle (100) using an inspection device (10), the inspection device (10) comprising:
a remotely operable device controller configured to control operation of the inspection device (10);
a shuttle (12) having first and second parts (18, 20), the first part (18) arranged to move substantially along a horizontally-extending first axis (142) on a surface under a frame (120) of the vehicle (100), the second part (20) engaged or engageable with the first part (18) and at least part (44) of the second part (20) being arranged to move relative to the first part (18) substantially along a horizontally-extending second axis, the first axis (142) being transverse to the second axis,
the shuttle (12) having at least a narrow configuration when moving the shuttle (12) under a frame (120) of a vehicle (100), and an extended configuration when inspecting an underbody (118) of a vehicle (100), and
a camera module (14) having a camera (54) and being configured to generate image data representing at least a part of an underbody (118) of a vehicle (100), the camera (54) being movable with the second part (20) relative to the first part (18);
wherein the method comprises:
with the shuttle (12) in the narrow configuration, moving the shuttle (12) under the frame (120) of the vehicle (100) along the first axis (142), between adjacent wheels (106, 108, 110, 112) on one side of the vehicle (100);
moving the shuttle (12) from the narrow configuration to the extended configuration by moving the at least part (44) of the second part (20) relative to the first part (18) substantially along the second axis so that a first end (28, 30) of the second part (20) substantially extends into at least a first region that extends between opposed wheels (106, 108, 110, 112) of the vehicle (100) and transversely to a longitudinally-extending axis of the vehicle (100); and
with the shuttle (12) in the extended configuration, generating image data representing at least a part of the underbody (118) of a vehicle (100).

15. A method as claimed in claim 14, wherein moving the shuttle (12) under the frame (120) of the vehicle (100) along the first axis (142) comprises moving the shuttle (12) under the frame (120) of the vehicle along a transversely-extending axis of the vehicle, so the at least part (44) of the second part (20) is located substantially beyond the wheel track (102, 104) defined by the adjacent wheels (106, 108, 110, 112).

## Patentansprüche

1. Fernsteuerbare Prüfvorrichtung (10) zur Prüfung eines Unterbodens (118) eines Fahrzeugs (100), wobei die Prüfvorrichtung (10) Folgendes aufweist:
eine Vorrichtungssteuerung, die zum Steuern des Betriebs der Prüfvorrichtung (10) konfiguriert ist;
einen Schlitten (12) mit einem ersten und einem zweiten Teil (18, 20), wobei der erste Teil (18) angeordnet ist, um sich im Wesentlichen entlang einer horizontal verlaufenden ersten Achse (32) auf einer Oberfläche unter einem Rahmen (120) eines Fahrzeugs (100) zu bewegen, der zweite Teil (20) mit dem ersten Teil (18) in Eingriff ist oder in Eingriff gebracht werden kann und wenigstens ein Teil (44) des zweiten Teils (20) angeordnet ist, um sich relativ zum ersten Teil (18) im Wesentlichen an einer horizontal verlaufenden zweiten Achse (40) entlang zu bewegen, wobei die erste Achse (32) quer zur zweiten Achse (40) ist,
wobei der Schlitten (12) wenigstens eine schmale Konfiguration, wenn der Schlitten (12) unter einen Rahmen (120) eines Fahrzeugs (100) bewegt wird, und eine verlängerte Konfiguration, wenn ein Unterboden (118) eines Fahrzeugs (100) geprüft wird, hat und
der erste und der zweite Teil (18, 20) so angeordnet sind, dass in der verlängerten Konfiguration:
ein erstes Ende (28, 30) des zweiten Teils (20) in einer Richtung entlang der zweiten Achse (40) weiter von einer Mitte (26) des ersten Teils (18) entfernt ist, als das erste Ende (28, 30) des zweiten Teils (20) in der schmalen Konfiguration ist, und
das erste Ende (28, 30) des zweiten Teils (20) sich jenseits eines Endes (22, 24) des ersten Teils (18) in der Richtung entlang der zweiten Achse (40) befindet; und
ein Kameramodul (14), das eine Kamera (54) hat und zum Erzeugen von Bilddaten konfiguriert ist, die wenigstens einen Teil eines Unterbodens (118) eines Fahrzeugs (100) darstellen, wobei die Kamera (54) mit dem zweiten Teil (20) relativ zum ersten Teil (18) bewegbar ist.

2. Prüfvorrichtung (10) nach Anspruch 1, wobei das Kameramodul (14) zum Übertragen von Bilddaten über wenigstens ein Kommunikationsnetz konfiguriert ist.

3. Prüfvorrichtung (10) nach Anspruch 1 oder Anspruch 2, wobei der zweite Teil (20) zur Bewegung relativ zum ersten Teil (18) im Wesentlichen entlang einer vertikal verlaufenden Achse (50) angeordnet ist, um die Kamera (54) vertikal zu oder von wenigstens einem Teil eines Unterbodens (118) eines Fahrzeugs (100) hin bzw. weg zu bewegen.

4. Prüfvorrichtung (10) nach Anspruch 1 oder Anspruch 2, wobei das Kameramodul (14) eine Aufnahme (56) aufweist, die die Kamera (54) relativ zum zweiten Teil (20) hält, wobei die Aufnahme (56) angeordnet ist, um sich relativ zum zweiten Teil (20) im Wesentlichen entlang einer vertikal verlaufenden Achse (50) zu bewegen, um die Kamera (54) vertikal zu oder von wenigstens einem Teil eines Unterbodens (118) eines Fahrzeugs (100) hin bzw. weg zu bewegen,
vorzugsweise wobei die Aufnahme (56) angeordnet ist, um sich im Wesentlichen entlang der vertikal verlaufenden Achse (50) zu bewegen, um die Kamera (54) zwischen wenigstens einer eingezogenen Stellung, in der wenigstens ein Teil der Kamera (54) im Wesentlichen unter einer oberen Region des zweiten Teils (20) ist, und einer angehobenen Stellung, in der der Teil der Kamera (54) im Wesentlichen über der oberen Region des zweiten Teils (20) ist, zu bewegen.

5. Prüfvorrichtung (10) nach einem der Ansprüche 1 bis 3, wobei das Kameramodul (14) eine Aufnahme (56) aufweist, in der die Kamera (54) relativ zu dem wenigstens einen Teil (44) des zweiten Teils (20) aufgenommen ist, wobei die Aufnahme (56) angeordnet ist, um sich relativ zum zweiten Teil (20) im Wesentlichen entlang der zweiten Achse (40) zu bewegen, so dass die Kamera (54) relativ zu dem wenigstens einen Teil (44) des zweiten Teils (20) im Wesentlichen entlang der zweiten Achse (40) bewegbar ist,
vorzugsweise wobei die Kamera (54) im Wesentlichen entlang der zweiten Achse (40) zwischen einer ersten Position an oder nahe an dem ersten Ende (28, 30) des wenigstens einen Teils (44) des zweiten Teils (20) und einer zweiten Position an oder nahe an einem zweiten Ende des wenigstens einen Teils (44) des zweiten Teils (20) bewegbar ist.

6. Prüfvorrichtung (10) nach einem der Ansprüche 1 bis 5, wobei die Kamera (54) eine im Wesentlichen vertikal verlaufende Schwenkachse hat und
die Kamera (54) zum Drehen relativ zu dem zweiten Teil (20) um die Schwenkachse konfiguriert ist,
vorzugsweise wobei die Kamera (54) eine allgemein horizontal verlaufende Kippachse hat und die Kamera (54) zum Drehen relativ zum zweiten Teil (20) um die Kippachse konfiguriert ist,
vorzugsweise wobei die Kamera (54) zum Heran- oder Herauszoomen angeordnet ist, und/oder
die vorzugsweise wenigstens einen Schutz (62) zum Schützen der Kamera (54) vor einem Zusammenstoß mit einem Fahrzeug (100) bei sich bewegender Prüfvorrichtung (10) aufweist,
die vorzugsweise wenigstens einen an oder nahe an dem Schutz (62) angeordneten Sensor aufweist, wobei der Sensor zum Erkennen, ob der Schutz (62) bei sich bewegender Prüfvorrichtung (10) mit einem Fahrzeug (100) zusammenstößt, konfiguriert ist.

7. Prüfvorrichtung (10) nach einem der Ansprüche 1 bis 6, die eine Reifenprofillehre (74) zum Messen einer Profiltiefe wenigstens eines Teils eines Reifens (106, 108, 110, 112) eines Fahrzeugs (100) aufweist,
die vorzugsweise ein Reifenprofilmodul (16) aufweist, das zum Erzeugen von die gemessene Profiltiefe darstellenden Profildaten konfiguriert ist;
wobei das Reifenprofilmodul (16) die Reifenprofillehre (74) aufweist und
das Reifenprofilmodul (16) zum Übertragen der Profildaten über wenigstens ein Kommunikationsnetz konfiguriert ist,
vorzugsweise wobei die Reifenprofillehre (74) einen Anzeiger hat, der die gemessene Profiltiefe optisch anzeigt, und das Kameramodul (14) zum Erzeugen von Bilddaten konfiguriert ist, die die auf dem Anzeiger angezeigte gemessene Profiltiefe darstellen, und zum Übertragen der die gemessene Profiltiefe darstellenden Bilddaten konfiguriert ist,
vorzugsweise wobei die Reifenprofillehre (74) am zweiten Teil (20) montiert ist.

8. Prüfvorrichtung (10) nach einem der Ansprüche 1 bis 7, die ein Mikrofonmodul aufweist, das ein Mikrofon hat, das zum Erzeugen von Audiodaten, die Schall darstellen, der während der Prüfung eines Unterbodens (118) eines Fahrzeugs (100) von einem Fahrzeug (100) ausgeht, wobei das Mikrofonmodul zum Übertragen der Audiodaten über wenigstens ein Kommunikationsnetz konfiguriert ist.

9. Prüfvorrichtung (10) nach einem der Ansprüche 1 bis 8, wobei der erste Teil (18) einen Wagen aufweist, wobei der Wagen angeordnet ist, um mit einer Bahn (34) in Eingriff zu sein, die sich im Wesentlichen entlang der ersten Achse (32) erstreckt,
vorzugsweise wobei der Wagen wenigstens ein Rad (36) hat, das angeordnet ist, um mit der Bahn (34) in Eingriff zu kommen, die sich im Wesentlichen entlang der ersten Achse (32) erstreckt.

10. Prüfsystem, das zur Prüfung eines Unterbodens (118) eines Fahrzeugs (100) konfiguriert ist, wobei das System Folgendes aufweist:
eine Prüfvorrichtung (10) nach einem der Ansprüche 1 bis 9;
eine Systemsteuerung (82), die zum Steuern des Betriebs der Prüfvorrichtung (10) konfiguriert ist, wobei die Systemsteuerung (82) die bzw. mit der Vorrichtungssteuerung aufweist oder verbunden ist, wobei die Systemsteuerung (82) zum Empfangen von wenigstens Bilddaten, die wenigstens einen Teil eines Unterbodens (118) eines Fahrzeugs (100) darstellen, von dem Kameramodul (14) der Prüfvorrichtung (10) konfiguriert ist; und
wenigstens eine Benutzervorrichtung (84), die über wenigstens ein Kommunikationsnetz mit der Systemsteuerung (82) verbunden ist,
vorzugsweise wobei die Systemsteuerung (82) konfiguriert ist, so dass ein Prüfer den Betrieb der Prüfvorrichtung (10) unter Verwendung der Benutzervorrichtung (84) von einem von der Prüfvorrichtung (10) entfernten Ort aus steuern kann,
vorzugsweise wobei die Benutzervorrichtung (84) eine Anzeige aufweist und die Systemsteuerung (82) konfiguriert ist, so dass ein Prüfer von einem von der Prüfvorrichtung (10) entfernten Ort aus auf der Anzeige ein oder mehr Bilder betrachten kann, die von der Prüfvorrichtung (10) empfangenen Bilddaten entsprechen, die wenigstens einen Teil eines Unterbodens (118) eines Fahrzeugs (100) darstellen.

11. Prüfsystem nach Anspruch 10, das einen Rollenprüfstand (86) aufweist, der zum Drehen von wenigstens einem Rad (106, 108, 110, 112) eines Fahrzeugs (100) konfiguriert ist,
vorzugsweise wobei die Systemsteuerung (82) mit dem Rollenprüfstand (86) verbunden ist und zum Steuern des Betriebs des Rollenprüfstands (86) während der Prüfung eines Unterbodens (118) eines Fahrzeugs (100) konfiguriert ist,
vorzugsweise wobei die Systemsteuerung (82) konfiguriert ist, so dass ein Prüfer den Betrieb des Rollenprüfstands (86) unter Verwendung der Benutzervorrichtung (84) von einem von der Prüfvorrichtung (10) entfernten Ort aus steuern kann,
vorzugsweise wobei die Systemsteuerung (82) konfiguriert ist, so dass ein Prüfer eine Geschwindigkeit des Rollenprüfstands (86) unter Verwendung der Benutzervorrichtung (84) von einem von der Prüfvorrichtung (10) entfernten Ort aus steuern kann,
vorzugsweise wobei der Rollenprüfstand (86) eine Reifenprofillehre (74) aufweist, die zum Messen der Profiltiefe eines Reifens (106, 108, 110, 112) eines Fahrzeugs (100), während der Reifen vom Rollenprüfstand (86) gedreht wird, angeordnet ist, wobei die Reifenprofillehre (74) zum Übertragen von Reifenprofildaten, die die gemessene Profiltiefe der Systemsteuerung (82) darstellen, konfiguriert ist.

12. Verfahren zur Prüfung eines Unterbodens (118) eines Fahrzeugs (100) unter Verwendung einer Prüfvorrichtung (10), wobei die Prüfvorrichtung (10) Folgendes aufweist:
eine fernsteuerbare Vorrichtungssteuerung, die zum Steuern des Betriebs der Prüfvorrichtung (10) konfiguriert ist;
einen Schlitten (12) mit einem ersten und einem zweiten Teil (18, 20), wobei der erste Teil (18) angeordnet ist, um sich im Wesentlichen entlang einer horizontal verlaufenden ersten Achse (32) auf einer Oberfläche unter einem Rahmen (120) des Fahrzeugs (100) zu bewegen, der zweite Teil (20) mit dem ersten Teil (18) in Eingriff ist oder in Eingriff gebracht werden kann und wenigstens ein Teil (44) des zweiten Teils (20) angeordnet ist, um sich relativ zum ersten Teil (18) im Wesentlichen entlang einer horizontal verlaufenden zweiten Achse (40) zu bewegen, wobei die erste Achse (32) quer zur zweiten Achse (40) ist,
wobei der Schlitten (12) wenigstens eine schmale Konfiguration, wenn der Schlitten (12) unter einen Rahmen (120) eines Fahrzeugs (100) bewegt wird, und eine verlängerte Konfiguration, wenn ein Unterboden (118) eines Fahrzeugs (100) geprüft wird, hat, und
ein Kameramodul (14), das eine Kamera (54) hat und zum Erzeugen von Bilddaten konfiguriert ist, die wenigstens einen Teil eines Unterbodens (118) eines Fahrzeugs (100) darstellen, wobei die Kamera (54) mit dem zweiten Teil (20) relativ zum ersten Teil (18) bewegbar ist;
wobei das Verfahren Folgendes aufweist:
bei in der schmalen Konfiguration befindlichem Schlitten (12) Bewegen des Schlittens (12) entlang der ersten Achse (32) unter den Rahmen (120) des Fahrzeugs (100), im Wesentlichen zwischen Radspuren (102, 104) des Fahrzeugs (100);
Bewegen des Schlittens (12) von der schmalen Konfiguration in die verlängerte Konfiguration durch Bewegen des wenigstens einen Teils (44) des zweiten Teils (20) relativ zum ersten Teil (18) im Wesentlichen entlang der zweiten Achse (40), so dass ein erstes Ende (28, 30) des zweiten Teils (20) sich im Wesentlichen über eine der Radspuren (102, 104) des Fahrzeugs (100) erstreckt; und
bei in der verlängerten Konfiguration befindlichem Schlitten (12) Erzeugen von Bilddaten, die wenigstens einen Teil des Unterbodens (118) des Fahrzeugs (100) darstellen.

13. Verfahren nach Anspruch 12, wobei das Bewegen des Schlittens (12) entlang der ersten Achse (32) unter den Rahmen (120) des Fahrzeugs (100) das Bewegen des Schlittens (12) entlang einer längs verlaufenden Achse des Fahrzeugs (100) unter den Rahmen (120) des Fahrzeugs (100) aufweist, so dass der wenigstens eine Teil des zweiten Teils (20) sich im Wesentlichen jenseits wenigstens einer ersten Region befindet, die sich zwischen einander entgegengesetzten Rädern (106, 108, 110, 112) des Fahrzeugs (100) und quer zur längs verlaufenden Achse erstreckt.

14. Verfahren zur Prüfung eines Unterbodens (118) eines Fahrzeugs (100) unter Verwendung einer Prüfvorrichtung (10), wobei die Prüfvorrichtung (10) Folgendes aufweist:
eine fernsteuerbare Vorrichtungssteuerung, die zum Steuern des Betriebs der Prüfvorrichtung (10) konfiguriert ist;
einen Schlitten (12) mit einem ersten und einem zweiten Teil (18, 20), wobei der erste Teil (18) angeordnet ist, um sich im Wesentlichen entlang einer horizontal verlaufenden ersten Achse (142) auf einer Oberfläche unter einem Rahmen (120) des Fahrzeugs (100) zu bewegen, der zweite Teil (20) mit dem ersten Teil (18) in Eingriff ist oder in Eingriff gebracht werden kann und wenigstens ein Teil (44) des zweiten Teils (20) angeordnet ist, um sich relativ zum ersten Teil (18) im Wesentlichen entlang einer horizontal verlaufenden zweiten Achse zu bewegen, wobei die erste Achse (142) quer zur zweiten Achse ist,
wobei der Schlitten (12) wenigstens eine schmale Konfiguration, wenn der Schlitten (12) unter einen Rahmen (120) eines Fahrzeugs (100) bewegt wird, und eine verlängerte Konfiguration, wenn ein Unterboden (118) eines Fahrzeugs (100) geprüft wird, hat, und
ein Kameramodul (14), das eine Kamera (54) hat und zum Erzeugen von Bilddaten konfiguriert ist, die wenigstens einen Teil eines Unterbodens (118) eines Fahrzeugs (100) darstellen, wobei die Kamera (54) mit dem zweiten Teil (20) relativ zum ersten Teil (18) bewegbar ist;
wobei das Verfahren Folgendes aufweist:
bei in der schmalen Konfiguration befindlichem Schlitten (12) Bewegen des Schlittens (12) entlang der ersten Achse (142) zwischen benachbarten Rädern (106, 108, 110, 112) auf einer Seite des Fahrzeugs (100) unter den Rahmen (120) des Fahrzeugs (100) ;
Bewegen des Schlittens (12) von der schmalen Konfiguration in die verlängerte Konfiguration durch Bewegen des wenigstens einen Teils (44) des zweiten Teils (20) relativ zum ersten Teil (18) im Wesentlichen entlang der zweiten Achse, so dass ein erstes Ende (28, 30) des zweiten Teils (20) sich im Wesentlichen in wenigstens eine erste Region erstreckt, die sich zwischen einander entgegengesetzten Rädern (106, 108, 110, 112) des Fahrzeugs (100) und quer zu einer längs verlaufenden Achse des Fahrzeugs (100) erstreckt; und
bei in der verlängerten Konfiguration befindlichem Schlitten (12) Erzeugen von Bilddaten, die wenigstens einen Teil des Unterbodens (118) des Fahrzeugs (100) darstellen.

15. Verfahren nach Anspruch 14, wobei das Bewegen des Schlittens (12) entlang der ersten Achse (142) unter den Rahmen (120) des Fahrzeugs (100) das Bewegen des Schlittens (12) entlang einer quer verlaufenden Achse des Fahrzeugs (100) unter den Rahmen (120) des Fahrzeugs (100) aufweist, so dass der wenigstens eine Teil (44) des zweiten Teils (20) sich im Wesentlichen zwischen der von den benachbarten Rädern (106, 108, 110, 112) definierten Radspur (102, 104) befindet.

## Revendications

1. Dispositif d'inspection actionnable à distance (10) pour inspecter un dessous de caisse (118) d'un véhicule (100), le dispositif d'inspection (10) comprenant :
un contrôleur de dispositif configuré pour contrôler le fonctionnement du dispositif d'inspection (10) ;
un va-et-vient (12) ayant une première et une deuxième partie (18, 20), la première partie (18) étant arrangée pour se déplacer sensiblement le long d'un premier axe s'étendant horizontalement (32) sur une surface sous un châssis (120) d'un véhicule (100), la deuxième partie (20) engagée ou engageable avec la première partie (18) et au moins une partie (44) de la deuxième partie (20) étant arrangée pour se déplacer par rapport à la première partie (18) sensiblement le long d'un deuxième axe s'étendant horizontalement (40), le premier axe (32) étant transversal au deuxième axe (40),
le va-et-vient (12) ayant au moins une configuration étroite en déplaçant le va-et-vient (12) sous un châssis (120) d'un véhicule (100), et une configuration étendue en inspectant un dessous de caisse (118) d'un véhicule (100), et
la première et la deuxième partie (18, 20) étant arrangées de telle sorte que, dans la configuration étendue :
une première extrémité (28, 30) de la deuxième partie (20) est plus loin, dans une direction le long du deuxième axe (40), d'un milieu (26) de la première partie (18) que la première extrémité (28, 30) de la deuxième partie (20) ne l'est dans la configuration étroite, et
la première extrémité (28, 30) de la deuxième partie (20) est située au-delà d'une extrémité (22, 24) de la première partie (18) dans la direction le long du deuxième axe (40) ; et
un module de caméra (14) ayant une caméra (54) et étant configuré pour générer des données d'image représentant au moins une partie d'un dessous de caisse (118) d'un véhicule (100), la caméra (54) étant déplaçable avec la deuxième partie (20) par rapport à la première partie (18).

2. Dispositif d'inspection (10) selon la revendication 1, dans lequel le module de caméra (14) est configuré pour transmettre des données d'image par au moins un réseau de communication.

3. Dispositif d'inspection (10) selon la revendication 1 ou la revendication 2, dans lequel la deuxième partie (20) est arrangée pour se déplacer par rapport à la première partie (18) sensiblement le long d'un axe s'étendant verticalement (50) de manière à déplacer la caméra (54) verticalement vers ou à l'écart d'au moins une partie d'un dessous de caisse (118) d'un véhicule (100).

4. Dispositif d'inspection (10) selon la revendication 1 ou la revendication 2, dans lequel le module de caméra (14) comprend un chariot (56) pour tenir la caméra (54) par rapport à la deuxième partie (20), le chariot (56) étant arrangé pour se déplacer par rapport à la deuxième partie (20) sensiblement le long d'un axe s'étendant verticalement (50) de manière à déplacer la caméra (54) verticalement vers ou à l'écart d'au moins une partie d'un dessous de caisse (118) d'un véhicule (100),
de préférence dans lequel le chariot (56) est arrangé pour se déplacer sensiblement le long d'un axe s'étendant verticalement (50) de manière à déplacer la caméra (54) entre au moins une position rétractée dans laquelle au moins une partie de la caméra (54) est sensiblement au-dessous d'une région supérieure de la deuxième partie (20) et une position surélevée dans laquelle la partie de la caméra (54) est sensiblement au-dessus de la région supérieure de la deuxième partie (20).

5. Dispositif d'inspection (10) selon l'une quelconque des revendications 1 à 3, dans lequel le module de caméra (14) comprend un chariot (56) pour tenir la caméra (54) par rapport à la au moins une partie (44) de la deuxième partie (20), le chariot (56) étant arrangé pour se déplacer par rapport à la deuxième partie (20) sensiblement le long du deuxième axe (40) de sorte que la caméra (54) est déplaçable par rapport à la au moins une partie (44) de la deuxième partie (20) sensiblement le long du deuxième axe (40),
de préférence dans lequel la caméra (54) est déplaçable, sensiblement le long du deuxième axe (40), entre une première position à ou près de la première extrémité (28, 30) de la au moins une partie (44) de la deuxième partie (20) et une deuxième position à ou près d'une deuxième extrémité de la au moins une partie (44) de la deuxième partie (20).

6. Dispositif d'inspection (10) selon l'une quelconque des revendications 1 à 5, dans lequel la caméra (54) a un axe panoramique s'étendant généralement verticalement, et
la caméra (54) est configurée pour tourner par rapport à la deuxième partie (20) autour de l'axe panoramique,
de préférence dans lequel la caméra (54) a un axe d'inclinaison s'étendant généralement horizontalement, et la caméra (54) est configurée pour tourner par rapport à la deuxième partie (20) autour de l'axe d'inclinaison,
de préférence dans lequel la caméra (54) est arrangée pour faire un zoom avant et arrière, et/ou
comprenant de préférence au moins un dispositif de protection (62) arrangé pour protéger la caméra (54) de heurter un véhicule (100) lorsque le dispositif d'inspection (10) bouge,
comprenant de préférence au moins un capteur arrangé sur ou près du dispositif de protection (62), le capteur étant configuré pour détecter si le dispositif de protection (62) heurte un véhicule (100) lorsque le dispositif d'inspection (10) bouge.

7. Dispositif d'inspection (10) selon l'une quelconque des revendications 1 à 6, comprenant une jauge de bande de roulement de pneu (74) pour mesurer une profondeur de bande de roulement d'au moins une partie d'un pneu (106, 108, 110, 112) d'un véhicule (100),
comprenant de préférence un module de bande de roulement de pneu (16) configuré pour générer des données de bande de roulement représentant la profondeur de bande de roulement mesurée ;
dans lequel le module de bande de roulement de pneu (16) comprend la jauge de bande de roulement de pneu (74), et
le module de bande de roulement de pneu (16) est configuré pour transmettre les données de bande de roulement par au moins un réseau de communication,
de préférence dans lequel la jauge de bande de roulement de pneu (74) a un indicateur qui indique visuellement la profondeur de bande de roulement mesurée, et le module de caméra (14) est configuré pour générer des données d'image représentant la profondeur de bande de roulement mesurée montrée sur l'indicateur, et configuré pour transmettre les données d'image représentant la profondeur de bande de roulement mesurée,
de préférence dans lequel la jauge de bande de roulement de pneu (74) est montée sur la deuxième partie (20).

8. Dispositif d'inspection (10) selon l'une quelconque des revendications 1 à 7, comprenant un module de microphone ayant un microphone configuré pour générer des données audio représentant un son émanant d'un véhicule (100) durant l'inspection d'un dessous de caisse (118) d'un véhicule (100), le module de microphone étant configuré pour transmettre les données audio par au moins un réseau de communication.

9. Dispositif d'inspection (10) selon l'une quelconque des revendications 1 à 8, dans lequel la première partie (18) comprend une plate-forme de roulage, la plate-forme de roulage étant arrangée pour engager une voie (34) qui s'étend sensiblement le long du premier axe (32),
de préférence dans lequel la plate-forme de roulage a au moins une roue (36) qui est arrangée pour engager la voie (34) qui s'étend sensiblement le long du premier axe (32).

10. Système d'inspection configuré pour inspecter un dessous de caisse (118) d'un véhicule (100), le système comprenant :
un dispositif d'inspection (10) selon l'une quelconque des revendications 1 à 9 ;
un contrôleur de système (82) configuré pour contrôler le fonctionnement du dispositif d'inspection (10), le contrôleur de système (82) comprenant ou étant connecté au contrôleur de dispositif, le contrôleur de système (82) étant configuré pour recevoir au moins des données d'image représentant au moins une partie d'un dessous de caisse (118) d'un véhicule (100) du module de caméra (14) du dispositif d'inspection (10) ; et
au moins un dispositif utilisateur (84) connecté au contrôleur de système (82) par au moins un réseau de communication,
de préférence dans lequel le contrôleur de système (82) est configuré de sorte qu'un inspecteur peut contrôler le fonctionnement du dispositif d'inspection (10) en utilisant le dispositif utilisateur (84), d'un endroit à distance du dispositif d'inspection (10).
de préférence dans lequel le dispositif utilisateur (84) comprend un affichage, et le contrôleur de système (82) est configuré de sorte qu'un inspecteur peut visionner sur l'affichage, d'un endroit à distance du dispositif d'inspection (10), une ou plusieurs images correspondant à des données d'image représentant au moins une partie d'un dessous de caisse (118) d'un véhicule (100) reçues du dispositif d'inspection (10).

11. Dispositif d'inspection selon la revendication 10, comprenant une plate-forme à galets pour roues (86) configurée pour faire tourner au moins une roue (106, 108, 110, 112) d'un véhicule (100),
de préférence dans lequel le contrôleur de système (82) est connecté à la plate-forme à galets pour roues (86) et configuré pour contrôler le fonctionnement de la plate-forme à galets pour roues (86) durant l'inspection d'un dessous de caisse (118) d'un véhicule (100),
de préférence dans lequel le contrôleur de système (82) est configuré de sorte qu'un inspecteur peut contrôler le fonctionnement de la plate-forme à galets pour roues (86) en utilisant le dispositif utilisateur (84), d'un endroit à distance du dispositif d'inspection (10),
de préférence dans lequel le contrôleur de système (82) est configuré de sorte qu'un inspecteur peut contrôler une vitesse de la plate-forme à galets pour roues (86) en utilisant le dispositif utilisateur (84), d'un endroit à distance du dispositif d'inspection (10),
de préférence dans lequel la plate-forme à galets pour roues (86) comprend une jauge de bande de roulement de pneu (74) arrangée pour mesurer la profondeur de bande de roulement d'un pneu (106, 108, 110, 112) au fur et à mesure que le pneu est tourné par la plate-forme à galets pour roues (86), la jauge de bande de roulement de pneu (74) étant configurée pour transmettre des données de bande de roulement de pneu représentant la profondeur de bande de roulement mesurée au contrôleur de système (82).

12. Méthode d'inspection d'un dessous de caisse (118) d'un véhicule (100) en utilisant un dispositif d'inspection (10), le dispositif d'inspection (10) comprenant :
un contrôleur de dispositif actionnable à distance configuré pour contrôler le fonctionnement du dispositif d'inspection (10) ;
un va-et-vient (12) ayant une première partie et une deuxième partie (18, 20), la première partie (18) étant arrangée pour se déplacer sensiblement le long d'un premier axe s'étendant horizontalement (32) sur une surface sous un châssis (120) du véhicule (100), la deuxième partie (20) engagée ou engageable avec la première partie (18) et au moins une partie (44) de la deuxième partie (20) étant arrangée pour se déplacer par rapport à la première partie (18) sensiblement le long d'un deuxième axe s'étendant horizontalement (40), le premier axe (32) étant transversal au deuxième axe (40),
le va-et-vient (12) ayant au moins une configuration étroite en déplaçant le va-et-vient (12) sous un châssis (120) d'un véhicule (100), et une configuration étendue en inspectant un dessous de caisse (118) d'un véhicule (100), et
un module de caméra (14) ayant une caméra (54) et étant configuré pour générer des données d'image représentant au moins une partie d'un dessous de caisse (118) d'un véhicule (100), la caméra (54) étant déplaçable avec la deuxième partie (20) par rapport à la première partie (18) ;
où la méthode comprend :
avec le va-et-vient (12) dans la configuration étroite, déplacer le va-et-vient (12) sous le châssis (120) du véhicule (100) le long du premier axe (32), sensiblement entre les voies de roues (102, 104) du véhicule (100) ;
déplacer le va-et-vient (12) de la configuration étroite à la configuration étendue en déplaçant la au moins une partie (44) de la deuxième partie (20) par rapport à la première partie (18) sensiblement le long du deuxième axe (40) de sorte qu'une première extrémité (28, 30) de la deuxième partie (20) s'étend sensiblement sur l'une des voies de roues (102, 104) du véhicule (100) ; et
avec le va-et-vient (12) dans la configuration étendue, générer des données d'image représentant au moins une partie du dessous de caisse (118) du véhicule (100).

13. Méthode selon la revendication 12, dans laquelle déplacer le va-et-vient (12) sous le châssis (120) du véhicule (100) le long du premier axe (32) comprend déplacer le va-et-vient (12) sous le châssis (120) du véhicule (100) le long d'un axe s'étendant longitudinalement du véhicule (100), de sorte qu'au moins une partie de la deuxième partie (20) est située sensiblement au-delà d'au moins une première région qui s'étend entre des roues opposées (106, 108, 110, 112) du véhicule (100) et transversalement à l'axe s'étendant longitudinalement.

14. Méthode d'inspection d'un dessous de caisse (118) d'un véhicule (100) en utilisant le dispositif d'inspection (10), le dispositif d'inspection (10) comprenant :
un contrôleur de dispositif actionnable à distance configuré pour contrôler le fonctionnement du dispositif d'inspection (10) ;
un va-et-vient (12) ayant une première partie et une deuxième partie (18, 20), la première partie (18) étant arrangée pour se déplacer sensiblement le long d'un premier axe s'étendant horizontalement (142) sur une surface sous un châssis (120) du véhicule (100), la deuxième partie (20) engagée ou engageable avec la première partie (18) et au moins une partie (44) de la deuxième partie (20) étant arrangée pour se déplacer par rapport à la première partie (18) sensiblement le long d'un deuxième axe s'étendant horizontalement (142), le premier axe (32) étant transversal au deuxième axe,
le va-et-vient (12) ayant au moins une configuration étroite en déplaçant le va-et-vient (12) sous un châssis (120) d'un véhicule (100), et une configuration étendue en inspectant un dessous de caisse (118) d'un véhicule (100), et
un module de caméra (14) ayant une caméra (54) et étant configuré pour générer des données d'image représentant au moins une partie d'un dessous de caisse (118) d'un véhicule (100), la caméra (54) étant déplaçable avec la deuxième partie (20) par rapport à la première partie (18) ;
où la méthode comprend :
avec le va-et-vient (12) dans la configuration étroite, déplacer le va-et-vient (12) sous le châssis (120) du véhicule le long du premier axe (142), entre des roues adjacentes (106, 108, 110, 112) d'un côté du véhicule (100) ;
déplacer le va-et-vient (12) de la configuration étroite à la configuration étendue en déplaçant la au moins une partie (44) de la deuxième partie (20) par rapport à la première partie (18) sensiblement le long du deuxième axe de sorte qu'une première extrémité (28, 30) de la deuxième partie (20) s'étend sensiblement dans au moins une première région qui s'étend entre des roues opposées (106, 108, 110, 112) du véhicule (100) et transversalement à un axe s'étendant longitudinalement du véhicule (100) ; et
avec le va-et-vient (12) dans la configuration étendue, générer des données d'image représentant au moins une partie du dessous de caisse (118) d'un véhicule (100).

15. Méthode selon la revendication 14, dans laquelle déplacer le va-et-vient (12) sous le châssis (120) du véhicule (100) le long du premier axe (142) comprend déplacer le va-et-vient (12) sous le châssis (120) du véhicule le long d'un axe s'étendant transversalement du véhicule, de sorte que la au moins une partie (44) de la deuxième partie (20) est située sensiblement au-delà de la voie de roue (102, 104) définie par les roues adjacentes (106, 108, 110, 112).
